# EUROPEAN PATENT SPECIFICATION

(11) **EP 4 387 172 B1**
(45) Date of publication and mention of the grant of the patent: **09.09.2026**
(21) Application number: 22874181.5
(22) Date of filing: 21.04.2022
(51) Int. Cl.: H04L 12/14, H04W 4/24, H04M 15/00

(54) **CHARGING METHOD AND DEVICE**
KOSTENBERECHNUNGSVERFAHREN UND -VORRICHTUNG
PROCÉDÉ ET DISPOSITIF DE TAXATION

(30) Priority: 01.10.2021 CN 202111166987
(43) Date of publication of application: 19.06.2024
(60) Divisional application: 26165265.5 / 4 779 935
(73) Proprietor: Huawei Technologies Co., Ltd., Shenzhen, Guangdong 518129 (CN)
(72) Inventor: CHAI, Xiaoqian, Shenzhen, Guangdong 518129 (CN)
(74) Representative: Körber, Martin Hans
(86) International application number: PCT/CN2022/088048
(87) International publication number: WO 2023/050782

(56) References cited:
- EP-A1- 3 755 014
- WO-A1-2020/030286
- CN-A- 101 001 402
- CN-A- 101 163 020
- CN-A- 101 521 868
- CN-A- 104 270 734
- CN-A- 110 166 961
- US-A1- 2009 088 129
- US-A1- 2015 223 042

## Description

### TECHNICAL FIELD

This application relates to the field of communication technologies, and in particular, to charging methods, apparatuses, computer storage medium and computer program product.

### BACKGROUND

Current roaming accounting uses an international roaming account procedure TAP (Transferred Account Procedure) defined by the GSMA. In the TAP, a detailed data record is generated based on each transfer record, transfer data of each minute, or transfer data of each message. Therefore, roaming accounting performed in the TAP manner causes an extremely large amount of data, cannot meet a real-time requirement of a 5th generation (Fifth Generation, 5G) mobile communication technology service, and cannot be applied to a small-traffic data service such as IoT.

Currently, another roaming account manner is billing and charging evolution (Billing and Charging Evolution, BCE). BCE supports charging based on daily, monthly, quarterly, yearly, or agreed-upon usage data.

In a 5G local breakout (Local Breakout, LBO for short) roaming architecture, reconciliation, conflict resolution, and accounting between a visited network and a home network are based on a BCE procedure. There are various 5G service requirements. Therefore, there are a plurality of requirements for a detailed data record (detailed data recording, DDR) DDR for 5G service-based roaming accounting. However, a current LBO architecture of the 5G network does not have a corresponding solution to support BCE-based roaming accounting between the visited network and the home network. As a result, a DDR document generated by the visited network is difficult to support roaming account reconciliation, accounting, and conflict resolution by using a usage data report (Usage Data Report, UDR), a billing statement report (Billing Statement Report, BSR), and the like, and cannot meet various service account requirements.

WO 2020/030286 A1 discloses a solution for coordinated session charging in roaming scenarios.

EP 3 755 014 A1 discloses a charging method. In the roaming scenario, the H-SMF and the V-SMF send a charging credit control request to the OCS and receives response from the OCS respectively.

US 2009/088129 A1 discloses a method for sharing charging information between a home IMS network and a visited IMS network.

CN 104 270 734 A1 discloses a method for charging inter-PLMN roaming data service online.

### SUMMARY

Embodiments of this application provide a charging method and an apparatus, so that roaming charging in a local breakout roaming scenario can be implemented in a 5G architecture, to avoid roaming reconciliation, accounting, and conflict problems on a premise of service diversification in a 5G network, and meet a plurality of service account requirements. The invention is set out in the appended set of claims.

To achieve the foregoing objective, embodiments of this application provide the following technical solutions: A charging trigger device of a visited network receives a creation request of a data connection session and determines that a user of the data connection session is a roaming user. The charging trigger device of the visited network sends a first charging resource creation request to a roaming charging system of the visited network of the roaming user, where the first charging resource creation request is used to request to create a first charging resource for the data connection session. The charging trigger device of the visited network receives a first charging resource creation response message returned by the roaming charging system of the visited network, where the first charging resource creation response message carries an identifier of the first charging resource. The charging trigger device of the visited network sends a second charging resource creation request to a roaming charging system of a home network of the roaming user, where the second charging resource creation request is used to request to create a second charging resource for the data connection session. The charging trigger device of the visited network receives a second charging resource creation response message returned by the charging management function of the home network, where the second charging resource creation response carries an identifier of the second charging resource. The charging trigger device of the visited network sends a first charging request to the roaming charging system of the visited network, where the first charging request includes first charging information and the identifier of the first charging resource, and the first charging information is used to perform roaming charging for the data connection session of the user. The charging trigger device of the visited network sends second charging information to the roaming charging system of the home network, where the second charging request includes second charging information and the identifier of the first charging resource, and the second charging information is used to perform online charging or converged charging for the data connection session of the user.

According to the foregoing method, the charging trigger device of the visited network separately requests to create charging resources for the data connection session, and sends the first charging information and the second charging information to the roaming charging system of the visited network and the roaming charging system of the home network respectively. Therefore, both the roaming charging system of the visited network and the roaming charging system of the home network can perform charging processing based on the first charging information or the second charging information sent by the charging trigger device of the visited network. In this way, even on a premise of service diversification in a 5G network, a DDR document generated by the roaming charging system of the visited network based on charging information can support roaming account reconciliation, accounting, and conflict resolution by using a usage data report (Usage Data Report, UDR), a billing statement report (Billing Statement Report, BSR) and a DDR, a UDR, a BSR, and the like generated by the roaming charging system of the home network, and a plurality of service account requirements can be met.

In an optional embodiment, the first charging information includes third charging information and indication information corresponding to the third charging information. The third charging information is usage of a service data flow corresponding to the second charging information, and the service data flow corresponding to the second charging information is a service data flow with quota management or a service data flow without quota management. The first charging information sent to the roaming charging system of the visited network further includes the usage of the service data flow corresponding to the second charging information sent to the home network, so that the charging system of the visited network does not perform repeated charging on the third charging information, to ensure charging accuracy.

In an optional embodiment, when the service data flow is a service data flow with quota management, the indication information indicates that the roaming charging system of the home network performs online charging on the usage that is of the service data flow and that is included in the third charging information, or when the service data flow is a service data flow without quota management, the indication information indicates that the roaming charging system of the home network performs offline charging on the usage that is of the service data flow and that is included in the third charging information. The indication information indicates that the roaming charging system of the home network has performed online charging or converged charging on the related service data flow, so that the charging of the visited network does not perform repeated charging on the third charging information, to ensure charging accuracy.

In an optional embodiment, the charging trigger device of the visited network obtains a first roaming charging profile configured in the charging trigger device before the data connection session is created, where the first roaming charging profile in the charging trigger device is used for roaming charging for the data connection session. The first charging resource creation request carries the first roaming charging profile in the charging trigger device. According to this method, the first roaming charging profile in the charging trigger device is sent to the roaming charging system of the visited network, so that the roaming charging system of the visited network can subsequently update a roaming charging profile.

In an optional embodiment, the first charging resource creation response further carries a first roaming charging profile of the visited network, and the first roaming charging profile of the visited network includes a roaming charging configuration parameter immediately used for roaming charging for the data connection session, and/or one or more groups of roaming charging configuration parameters used for roaming charging for the data connection session after the data connection session is created and a corresponding effective condition is met. According to this method, the first roaming charging profile of the visited network is received, to update the first roaming charging profile in the charging trigger device of the visited network.

In an optional embodiment, the second charging resource creation request carries a roaming charging profile used for roaming charging for the data connection session. According to this method, the roaming charging profile used for roaming charging for the data connection session in the charging trigger device is sent to the roaming charging system of the home network, so that the roaming charging system of the home network can subsequently update a roaming charging profile.

In an optional embodiment, the second charging resource creation response further carries a first roaming charging profile of the home network, and the first roaming charging profile of the home network includes a roaming charging configuration parameter immediately used for roaming charging for the data connection session, and/or one or more groups of roaming charging configuration parameters used for roaming charging for the data connection session after the data connection session is created and a corresponding effective condition is met. According to this method, the first roaming charging profile of the home network is received, to update the roaming charging profile in the charging trigger device of the visited network.

In an optional embodiment, the first charging information includes charging information corresponding to a quality of service flow QoS flow and/or charging information corresponding to a service. The second charging information includes online charging information of a service data flow on which online charging is performed in the data connection session, or includes converged charging information of a service data flow on which online charging is performed and a service data flow on which offline charging is performed in the data connection session. According to this method, the first charging information includes charging information corresponding to a QoS flow and/or charging information corresponding to a service, so that a bill generated by the roaming charging system of the visited network can meet requirements of a plurality of services, and does not conflict with a bill generated by the roaming charging system of the home network. The information included in the second charging information enables the bill generated by the roaming charging system of the visited network to meet the requirements of the plurality of services, and does not conflict with the bill generated by the roaming charging system of the visited network.

In an optional embodiment, the first charging request is sent based on the roaming charging profile used for the data connection session.

In an optional embodiment, the charging trigger device of the visited network receives a charging rule of the data connection session of the user sent by a policy control function, and sends the second charging information according to the charging rule.

In an optional embodiment, the method further includes: after the data connection session is created, receiving a first charging notification message sent by the roaming charging system of the visited network or a first charging response message corresponding to the first charging request, where the first charging response message or the first charging notification message includes a second roaming charging profile of the visited network, and the second roaming charging profile of the visited network includes a roaming charging configuration parameter immediately used for roaming charging for the data connection session, and/or one or more groups of roaming charging configuration parameters used for roaming charging for the data connection session after an included effective condition is met; and sending the second charging request to the roaming charging system of the home network, and using the second charging resource creation request to carry the second roaming charging profile of the visited network. According to this method, the roaming charging profile in the charging trigger device of the visited network is updated after the data connection session is created, and an updated roaming charging profile is sent to the roaming charging system of the visited network. In this way, the roaming charging profile can be dynamically updated, and roaming charging for the data connection session can meet various service requirements.

In an optional embodiment, the method further includes: after the data connection session is created, receiving a second charging notification message sent by the roaming charging system of the home network or a second charging response message corresponding to the second charging request, where the second charging response message or the second charging notification message includes a second roaming charging profile of the home network, and the second roaming charging profile of the home network includes a roaming charging profile parameter immediately used for roaming charging for the data connection session of the user, and/or one or more groups of roaming charging configuration parameters used for roaming charging for the data connection session after an included effective condition is met. According to this method, the roaming charging profile in the charging trigger device of the visited network is updated after the data connection session is created. In this way, the roaming charging profile can be dynamically updated, and roaming charging for the data connection session can meet various service requirements.

In an optional embodiment, the method further includes: after receiving the first roaming charging profile of the home network or the second roaming charging profile of the home network, sending the first charging request to the roaming charging system of the visited network, where the first charging request further includes the roaming charging configuration parameter immediately used for roaming charging for the data connection session in the first roaming charging profile of the home network or the second roaming charging profile of the home network; or after the effective condition included in the first roaming charging profile of the home network or the second roaming charging profile of the home network is met, sending the first charging request to the roaming charging system of the visited network, where the first charging request further includes the roaming charging configuration parameter used for roaming charging for the data connection session after the effective condition is met in the first roaming charging profile of the home network or the second roaming charging profile of the home network. According to this method, the updated roaming charging profile can be dynamically updated, and the roaming charging for the data connection session can meet various service requirements.

In an optional embodiment, the first charging resource creation request further carries first capability indication information, and the first capability indication information indicates that the charging trigger device of the visited network supports receiving the second roaming charging profile of the visited network or validating a roaming charging configuration parameter of the first roaming charging profile of the visited network after the data connection session is created. According to this method, through the first capability indication, the roaming charging system of the visited network can send an updated roaming charging profile to the charging trigger device of the visited network.

In an optional embodiment, the second charging resource creation request further carries second capability indication information, and the second capability indication information indicates that the charging trigger device of the visited network supports receiving the second roaming charging profile of the home network or validating the first roaming charging profile of the home network after the data connection session is created. According to this method, through the first capability indication, the roaming charging system of the visited network can send an updated roaming charging profile to the charging trigger device of the visited network.

In an optional embodiment, the first roaming charging profile of the home network or the second roaming charging profile of the home network includes a roaming charging profile change trigger; and the charging trigger device of the visited network sends the first charging request based on the roaming charging profile change trigger. According to this method, the roaming charging system of the home network may trigger a session management function of the visited network through a trigger to send the first charging request to the roaming charging system of the visited network.

According to a second aspect, this application provides a roaming charging method, applied to a roaming charging system of a visited network or a roaming charging system of a home network. The method includes: receiving a charging resource creation request sent by a charging trigger device of the visited network, where the charging resource creation request is used to request to create a charging resource for a data connection session of a roaming user; returning a charging resource creation response message to the charging trigger device of the visited network, where the charging resource creation response message carries an identifier of the created charging resource; receiving a first charging request sent by the charging trigger device of the visited network to the roaming charging system of the visited network, where the first charging request is used to perform roaming charging for the data connection session, or receiving a second charging request sent by the charging trigger device of the visited network to the roaming charging system of the home network, where the second charging request is used to perform online charging or converged charging for the protocol data unit; and charging the roaming user based on the first charging request or the second charging request.

According to this method, even on a premise of service diversification in a 5G network, a DDR document generated by the roaming charging system of the visited network based on charging information can support roaming account reconciliation, accounting, and conflict resolution by using a usage data report (Usage Data Report, UDR), a billing statement report (Billing Statement Report, BSR) and a DDR, a UDR, a BSR, and the like generated by the roaming charging system of the home network, and a plurality of service account requirements can be met.

In an optional embodiment, the charging resource creation request carries a roaming charging profile used for the data connection session. According to this method, the roaming charging profile in the charging trigger device of the visited network is received, to subsequently update the roaming charging profile in the charging trigger device of the visited network.

In an optional embodiment, the method includes: generating an updated roaming charging profile used for the data connection session. The charging resource creation response further carries the updated roaming charging profile used for the data connection session, and the updated roaming charging profile used for the data connection session includes a roaming charging configuration parameter immediately used for roaming charging for the data connection session, and/or one or more groups of roaming charging configuration parameters used for roaming charging for the data connection session after the data connection session is created and a corresponding effective condition is met.

According to this method, the updated roaming charging profile used for the data connection session is sent to a session function of the visited network, to update the roaming charging profile in the charging trigger device of the visited network. Therefore, a charging data record generated based on the updated roaming charging profile can meet more service requirements.

In an optional embodiment, the method includes: after the data connection session is created, determining to update the roaming charging profile used for the data connection session, and generating the updated roaming charging profile used for the data connection session. The updated roaming charging profile used for the data connection session includes a roaming charging configuration parameter immediately used for roaming charging for the data connection session, and/or one or more groups of roaming charging configuration parameters used for roaming charging for the data connection session after the data connection session is created and a corresponding effective condition is met and an effective condition of each group of roaming charging parameters. According to this method, after the session is created, the updated roaming charging profile used for the data connection session is sent to a session function of the visited network, to update the roaming charging profile in the charging trigger device of the visited network. Therefore, a charging data record generated based on the updated roaming charging profile can meet more service requirements.

In an optional embodiment, the charging resource creation request carries capability indication information, where the capability indication information indicates that the charging trigger device of the visited network supports after the data connection session is created, receiving an updated roaming charging configuration parameter used for roaming charging for the data connection session or validating a roaming charging configuration parameter used for roaming charging for the data connection session after an effective condition is met. According to this method, the updated roaming charging profile is sent to the charging trigger device of the visited network through the first capability indication.

In an optional embodiment, the method is applied to the roaming charging system of the visited network, the first charging request includes first charging information, and the first charging information includes charging information corresponding to a QoS flow and/or charging information corresponding to a service; and the charging the roaming user based on the first charging request includes: generating a roaming charging data record of the data connection session, where the roaming charging data record includes the first charging information. According to this method, the first charging information includes charging information corresponding to a QoS flow and/or charging information corresponding to a service, so that a bill generated by the roaming charging system of the visited network can meet requirements of a plurality of services, and does not conflict with a bill generated by the roaming charging system of the home network.

In an optional embodiment, the first charging information further includes a home network slice identifier of the data connection session. According to this method, the first charging information further includes the home network slice identifier of the data connection session, so that a bill and the like generated by the roaming charging system of the visited network can meet requirements of a plurality of services, and do not conflict with a bill generated by the roaming charging system of the home network.

In an optional embodiment, the first charging information includes third charging information and indication information corresponding to the third charging information, the third charging information is usage of a service data flow corresponding to second charging information that is sent to the charging management function of the home network, and the service data flow corresponding to the second charging information is a service data flow with quota management or a service data flow without quota management.

In an optional embodiment, when the service data flow is a service data flow with quota management, the indication information indicates that the roaming charging system of the home network performs online charging on the usage that is of the service data flow and that is included in the third charging information, or when the service data flow is a service data flow without quota management, the indication information indicates that the roaming charging system of the home network performs offline charging on the usage that is of the service data flow and that is included in the third charging information. The indication information indicates that the roaming charging system of the home network has performed online charging or converged charging on the related service data flow, so that the charging of the visited network does not perform repeated charging on the third charging information, to ensure charging accuracy.

In an optional embodiment, the charging resource creation response message includes an operation command of a roaming charging profile change trigger, where the trigger is configured to trigger the charging trigger device of the visited network to send the roaming charging information and the effective roaming charging profile when the roaming charging profile used for the data connection session of the user sent by the roaming charging system of the home network takes effect, and the operation command is an activation instruction of the trigger or is to change a state of the trigger.

In an optional embodiment, the first charging request further includes a roaming charging configuration parameter immediately used for roaming charging for the data connection session and a roaming charging profile change trigger in an updated roaming charging profile that is used for the data connection session and that is sent by the roaming charging system of the home network after the data connection session is created, and/or the first charging request further includes a roaming charging configuration parameter that is used for roaming charging for the data connection session after an effective condition is met and that is sent by the roaming charging system of the home network after the data connection session is created and a roaming charging information change trigger.

The roaming charging profile change trigger indicates that the first charging request is reported as triggered by a change of the roaming charging configuration parameter used for roaming charging for the data connection session.

According to this method, the roaming charging system of the home network may trigger a session management function of the visited network through a trigger to send the first charging request to the roaming charging system of the visited network.

In an optional embodiment, the method is applied to the roaming charging system of the home network, the second charging request includes second charging information, and the second charging information is used to apply for a quota for the data connection session and/or report usage.

The second charging information includes online charging information of a service data flow on which online charging is performed in the data connection session, and the charging the roaming user based on the second charging request includes: performing, by the roaming charging system of the home network, online charging on the second charging information; or
the second charging information includes converged charging information of a service data flow on which online charging is performed and a service data flow on which offline charging is performed in the data connection session, and the charging the roaming user based on the second charging request includes: performing, by the roaming charging system of the home network, converged charging on the second charging information.

According to this method, the information included in the second charging information enables a bill generated by the roaming charging system of the home network to meet requirements of a plurality of services, and does not conflict with a bill generated by the roaming charging system of the visited network.

In an optional embodiment, the method further includes: after the data connection session is created, sending a charging notification message or a charging response message corresponding to the charging request to the charging trigger device of the visited network, where the charging response message or the charging notification message includes the updated roaming charging profile used for the data connection session. According to this method, the updated roaming charging profile used for the data connection session is sent to the charging trigger device of the visited network, so that the charging trigger device of the visited network can update a roaming charging profile. Therefore, the updated roaming charging profile meets a plurality of service requirements.

In an optional embodiment, the method further includes: generating a DDR of the roaming user based on the roaming charging data record of the data connection session, where the DDR includes charging information of a QoS flow in the data connection session and/or charging information of a service in the data connection session of the user. The DDR further includes a data record corresponding to the third charging information and an identifier that indicates the roaming charging system of the home network to perform charging processing on the third charging information. According to this method, the DDR includes charging information corresponding to a QoS flow and/or charging information corresponding to a service, so that a bill generated by the roaming charging system of the visited network can meet requirements of a plurality of services, and does not conflict with a bill generated by the roaming charging system of the home network.

In an optional embodiment, the DDR further includes a home network slice identifier of the data connection session and/or a visited network slice identifier of the data connection session.

According to a third aspect, an apparatus is provided. The apparatus has a function of a charging trigger device of a visited network for implementing the method in the first aspect. The function may be implemented by hardware, or may be implemented by hardware executing corresponding software. The hardware or the software includes one or more modules corresponding to the function.

According to a fourth aspect, an apparatus is provided, including a processor and a memory. The memory is configured to store computer executable instructions, and when the apparatus runs, the processor executes the computer executable instructions stored in the memory, so that the apparatus performs the method according to any one of the first aspect. The apparatus may be specifically a chip in the charging trigger device in any method in the first aspect.

According to a fifth aspect, a computer-readable storage medium is provided. The computer-readable storage medium stores instructions. When the instructions are run on a computer, the computer is enabled to perform the roaming charging method according to any one of the first aspect.

According to a sixth aspect, a computer program product including instructions is provided. When the computer program product runs on a computer, the computer is enabled to perform the roaming charging method according to any one of the first aspect.

For technical effects brought in by any design manner in the second aspect to the sixth aspect, refer to technical effects brought in by different design manners in the first aspect. Details are not described herein again.

According to a seventh aspect, an apparatus is provided, and the system has a function of implementing the method in the second aspect. The function may be implemented by hardware, or may be implemented by hardware executing corresponding software. The hardware or the software includes one or more modules corresponding to the function.

According to an eighth aspect, an apparatus is provided, including a processor and a memory. The memory is configured to store computer executable instructions, and when the apparatus runs, the processor executes the computer executable instructions stored in the memory, so that the apparatus performs the method according to any one of the second aspect.

According to a ninth aspect, a computer-readable storage medium is provided. The computer-readable storage medium stores instructions. When the instructions are run on a computer, the computer is enabled to perform the charging method according to any one of the second aspect.

According to a tenth aspect, a computer program product including instructions is provided. When the computer program product runs on a computer, the computer is enabled to perform the roaming charging method according to any one of the second aspect.

According to a seventeenth aspect, a system is provided, including a charging trigger device of a visited network and a roaming charging system. A control plane function may perform processing performed by the charging trigger device in any one of the foregoing aspects. The roaming charging system may perform processing performed by the charging function of the visited network or the roaming charging system of the home network in any one of the foregoing aspects.

These or other aspects of this application are more concise and easier to understand in the description of the following embodiments.

### BRIEF DESCRIPTION OF DRAWINGS

FIG. 1A is a schematic diagram of a structure of a roaming charging system according to an embodiment of this application;
FIG. 1B is a schematic diagram of an architecture in a local breakout roaming scenario according to an embodiment of this application;
FIG. 2 is a schematic diagram of a hardware structure of a communication device according to an embodiment of this application;
FIG. 3 is a schematic flowchart of a charging method in a local breakout roaming scenario according to an embodiment of this application;
FIG. 4 is a schematic flowchart of another charging method in a local breakout roaming scenario according to an embodiment of this application;
FIG. 5 is a schematic flowchart of another charging method in a local breakout roaming scenario according to an embodiment of this application;
FIG. 6 is a schematic flowchart of another charging method in a local breakout roaming scenario according to an embodiment of this application;
FIG. 7 is a schematic diagram of a structure of an apparatus according to an embodiment of this application; and
FIG. 8 is a schematic diagram of a structure of an apparatus according to an embodiment of this application.

### DESCRIPTION OF EMBODIMENTS

A network architecture and a service scenario described in embodiments of the present invention are intended to describe technical solutions of embodiments of the present invention more clearly, and do not constitute a limitation on the technical solutions provided in embodiments of the present invention. A person of ordinary skill in the art may know: With evolution of the network architecture and emergence of new service scenarios, the technical solutions provided in embodiments of the present invention are also applicable to similar technical problems.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"Multiple" refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

Terms in this application are defined as follows:
User device (user device): a device of a terminal user. The device may have a wireless communication capability to connect to a wireless access device through an air interface, or may have a wired communication capability to connect to a wired access device through a wired interface. From a perspective of a product form, the device may be a smartphone, a laptop computer (Laptop) with a wireless communication function, a tablet computer, a wearable device, an AR (Augmented Reality, augmented reality), an IoT (Internet of Things, internet of things) device, a desktop computer on an office desktop, or the like. The device may consume application services provided by an application server in a data network through a data connection session

The user device may have a function of UE (user equipment, user equipment) defined in the 3GPP standard specification, for example, UE in the figure.

Roaming user device: a user device in a roaming state.

Operator network: a communication network of an operator in a visited location of a user device. In embodiments of this application, it is assumed that the user device has roamed into the operator network. Therefore, the user device is an in-bound roamer (in-bound roamer) of the operator network, and the operator network is a visited network (visited network) of the user device, and is referred to as a "visited network" for short.

A data network (Data Network, DN): a network that is used to transmit data and that is formed by using a data switch as a transit point. For example, the internet (Internet) includes at least one application server (not shown in the figure) that provides an application service for a user device. A DNN (data network name, data network name) is usually used as an identifier of the data network.

A data connection session is an association (association) between a user device and a data network, and is used to provide a connection service for communication between the user device and the data network, so that a communication data packet (Packet) can be transmitted between the user device and the data network. A process of creating the data connection session may be initiated by the user device, and a process of removing the data connection session may be initiated by the user device, or may be initiated by another device (for example, a user plane data gateway). The data connection session may be an IP-CAN (IP-connectivity access network, IP connectivity access network) session or a protocol data unit session (protocol data unit session, PDU session) defined in the 3GPP standard specification, or may be a session in another form. This is not limited in embodiments of this application. The data connection session may be a protocol data unit session applicable to a 5G network, or may be another session applicable to another network. This is not limited in embodiments of this application.

A user plane data gateway is a core network element that provides a support service for a data connection session (for example, transferring a data packet from a user device to a data network through the user plane data gateway, or transferring a data packet from a data network to a user device through the user plane data gateway). The user plane data gateway collects, based on a collection operation configuration parameter, charging information (for example, a service unit usage) related to the data connection session, and provides the collected charging information for a charging trigger device. The collection operation configuration parameter may be locally configured on the user plane data gateway by default, or may be delivered by the charging trigger device to the user plane data gateway.

The user plane data gateway may include a function of a UPF (user plane function, user plane function) device, a function of a PGW-U (packet data network gateway for user plane, packet data gateway for user plane), a function of an SGW-U (serving gateway for user plane, serving gateway for user plane), or the like that is defined in the 3GPP standard specification. The user plane data gateway may be a user plane function UPF applicable to a 5G network architecture, or may be a network element applicable to another network architecture. This is not limited in embodiments of this application. In subsequent content, for ease of description, an example in which the user plane data gateway is the UPF in the 5G network architecture is used for description.

Roaming charging information is charging information related to a data connection session in a roaming scenario, and is charging information that is related to a roaming data connection session and that is sent by a charging trigger device of a visited network to a roaming charging system of the visited network.

Roaming charging configuration parameter: a configuration parameter related to an operation of roaming charging information. The operation includes a collection operation and/or a report operation. The collection operation is collecting roaming charging information from a roaming data connection session, and the report operation is sending the collected roaming charging information to a corresponding charging processing device. Therefore, the roaming charging configuration parameter includes a collection operation configuration parameter and/or a report operation configuration parameter. When one or more roaming charging configuration parameters are shared or synchronized between a home network and a visited network, synchronization and consistency of charging processing results of a same roaming data connection session between the two parties may be improved, to reduce errors generated during cross-network (that is, cross-operator network) accounting.

The collection operation configuration parameter is a configuration parameter related to a charging information collection operation, and is used to enable a user plane data gateway to determine how to collect roaming charging information for the roaming data connection session.

Local breakout (Local Breakout, LBO for short) roaming: After UE roams to a visited network, a media route is routed to the local network instead of a home network. In LBO roaming mode, all traffic passes through only the visited network.

In-bound UE is UE that moves to the local network (visited network) but belongs to another operator's network. The visited network and the home network in this application are relative to a user. The home network is a network to which the user belongs. The visited network is a network to which the user moves and that is outside the home network.

A roaming charging profile used for a data connection session and a roaming charging profile used for a PDU session of a user indicate different roaming charging profiles in different phases. In an initial phase of PDU session creation, when a roaming charging profile updated by a charging function of the visited network (V-CHF) and/or a charging function of the home network (H-CHF) is not received, the roaming charging profile used for the PDU session is a default roaming charging profile configured in a session management function of the visited network. The roaming charging profile used for the PDU session may also be a roaming charging profile updated by the V-CHF or the H-CHF by using a downlink roaming charging profile of the V-CHF or the H-CHF. The roaming charging profile used for the PDU session is an effective roaming charging profile used for the PDU session. If a roaming charging profile used for the PDU session has a corresponding effective condition but has not taken effect, the roaming charging profile that has not taken effect is not a roaming charging profile used for the PDU session.

For ease of description, the name of the roaming charging profile (that is, a roaming charging profile) is defined as follows:
1. In a process of creating a data connection session, a configured roaming charging profile obtained by a V-SMF is referred to as a first roaming charging profile in the V-SMF. The configured roaming charging profile in this application is a default roaming charging profile preconfigured in the V-SMF, that is, a default roaming charging profile configured in the V-SMF before the PDU session is created.
2. In the process of creating the data connection session, a roaming charging profile sent by the V-CHF and received by the V-SMF is referred to as a first roaming charging profile of the visited network.
3. In the process of creating the data connection session, a roaming charging profile sent by the H-CHF and received by the V-SMF is referred to as a first roaming charging profile of the home network.
4. In the process of creating the data connection session, the V-SMF updates the first roaming charging profile in the V-SMF by using the first roaming charging profile of the visited network, and an updated roaming charging profile is referred to as a second roaming charging profile in the V-SMF.
5. In the process of creating the data connection session, a roaming charging profile obtained by updating the first roaming charging profile in the V-SMF or the second roaming charging profile in the V-SMF by using the first roaming charging profile of the home network is referred to as a third roaming charging profile in the V-SMF.
6. In a process in which a user uses service data (that is, after the data connection session is created), a roaming charging profile sent by the H-CHF and received by the V-SMF is referred to as a second roaming charging profile of the home network.
7. In the process in which the user uses the service data, a roaming charging profile sent by the V-CHF and received by the V-SMF is referred to as a second roaming charging profile of the visited network.
8. In the process in which the user uses the service data (that is, after the data connection session is created), a roaming charging profile obtained by updating an existing roaming charging profile in the V-SMF by using the second roaming charging profile of the visited network is referred to as a fourth roaming charging profile in the V-SMF.
9. In the process in which the user uses the service data (that is, after the data connection session is created), a roaming charging profile obtained by updating an existing roaming charging profile in the V-SMF by using the second roaming charging profile of the home network is referred to as a fifth roaming charging profile in the V-SMF.

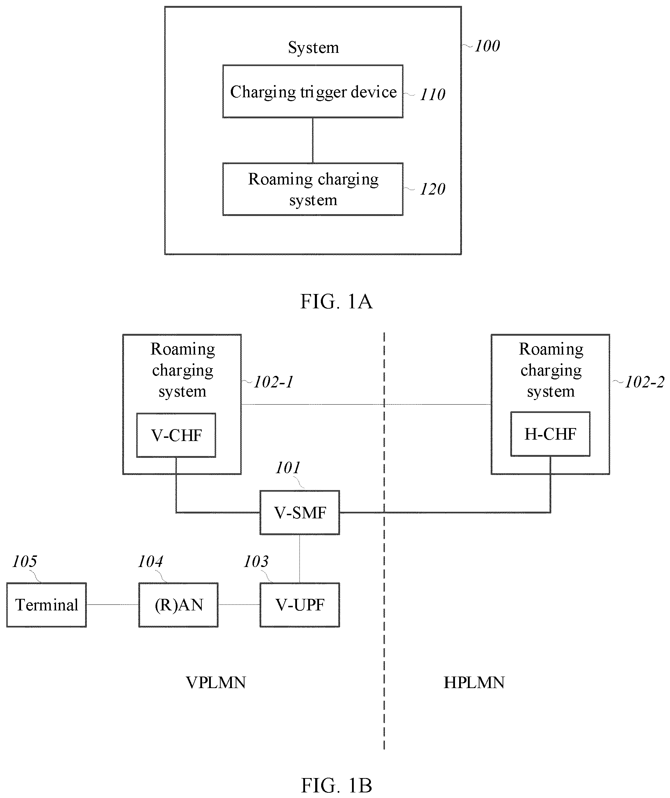

FIG. 1A shows a roaming charging system according to an embodiment of this application. The system includes a charging trigger device 110 and a roaming charging system 120. The charging trigger device and the roaming charging system may be network devices in a home network, or the charging trigger device and the roaming charging system may be network devices in a visited network. Interaction in another attribution form is not limited in this application. The charging trigger device 110 is configured to: obtain a roaming charging profile, update the roaming charging profile based on roaming charging configuration update information delivered by the roaming charging system, and generate roaming charging information based on the roaming charging profile. The charging trigger device 110 is further configured to send the generated roaming charging information to the roaming charging system 120. The charging trigger device may be a network element in the 5G system architecture. For example, the charging trigger device may be disposed in a session management function SMF in a 5G network, or may be disposed in an access and mobility management function (Access and Mobility Management Function, AMF) in the 5G network. The roaming charging system 120 may be a charging function CHF or a converged charging system (Converged Charging System, CCS) in the 5G network, or another entity including a roaming charging data record generation function and a roaming charging processing function. The roaming charging system may alternatively be another entity that includes a charging function CHF, a converged charging system (Converged Charging System, CCS), or roaming charging data record generation and roaming charging processing functions. The roaming charging system 120 is configured to: generate a roaming charging data record (Charging Data Record, CDR) based on the roaming charging information sent by the charging trigger device, and generate a detailed data record (Detail Data Record, DDR) based on the roaming CDR.

In addition, the charging trigger device and the roaming charging system in this application may be not limited to the 5G network architecture, and may be applied to any network architecture and support a scenario in which roaming charging is implemented. Subsequent content of this application is described by using an example in which the charging trigger device is disposed in the session management function in the 5G network architecture, or the charging trigger device is the SMF in the 5G network architecture. That is, the charging trigger device in FIG. 1A is configured to perform corresponding operations of the session management function of the visited network in FIG. 1B to FIG. 6. The roaming charging system in FIG. 1A is configured to perform corresponding operations of the charging function of the visited network (V-CHF) or the charging function of the home network (H-CHF) in FIG. 1B to FIG. 6.

FIG. 1B is a schematic diagram of a network structure for implementing roaming in an LBO scenario according to an embodiment of this application. In the scenario shown in FIG. 1B, the network structure includes a home public land mobile network (home Public Land Mobile Network, HPLMN) and a visited public land mobile network (visited Public Land Mobile Network, VPLMN). The home public land mobile network is referred to as a home network for short, and the visited public land mobile network is referred to as a visited network for short. In the scenario shown in FIG. 1B, a UPF 103 of the visited network sends, to an SMF 101 of the visited network, traffic used by a user for accessing the visited network. The SMF 101 of the visited network generates roaming charging information based on the traffic that is sent by the UPF 103 of the visited network and that is used by the user for accessing the visited network, sends the roaming charging information to a charging function entity of the visited network V-CHF, and generates charging information and sends the charging information to a charging function entity of the home network H-CHF. The charging function entity of the visited network V-CHF and the charging function entity of the home network H-CHF are configured to perform processing based on the roaming charging information of the user sent by the SMF 101 of the visited network. For example, the V-CHF generates a roaming charging data record (CDR) of the user in a roaming scenario, and the H-CHF performs quota management on access of the user. A roaming charging system 102-1 of the visited network includes the V-CHF. A roaming charging system 102-2 of the home network includes the H-CHF. The roaming charging system 102-1 of the visited network generates a roaming detailed data record (detailed data recording, DDR) based on the roaming CDR of the user generated by the V-CHF, and generates usage data report (Usage Data Report, UDR) information of the user based on the DDR of the user. The roaming charging system 102-2 of the home network generates a roaming detailed data record (detailed data recording, DDR) based on a roaming CDR of the user generated by the H-CHF, and generates usage data report (Usage Data Report, UDR) information of the user based on the DDR of the user generated by the H-CHF.

The SMF 101 of the visited network interacts with the roaming charging system 102-2 of the home network to perform charging processing for a PDU session of the user and update a roaming charging profile of the user. For example, the SMF 101 of the visited network sends the roaming charging profile of the user to the roaming charging system of the home network, and obtains an updated roaming charging profile of the user from the roaming charging system of the home network. The roaming charging system 102-1 of the visited network interacts with the roaming charging system 102-2 of the home network, and sends the generated UDR of the user to the roaming charging system 102-2 of the home network for accounting.

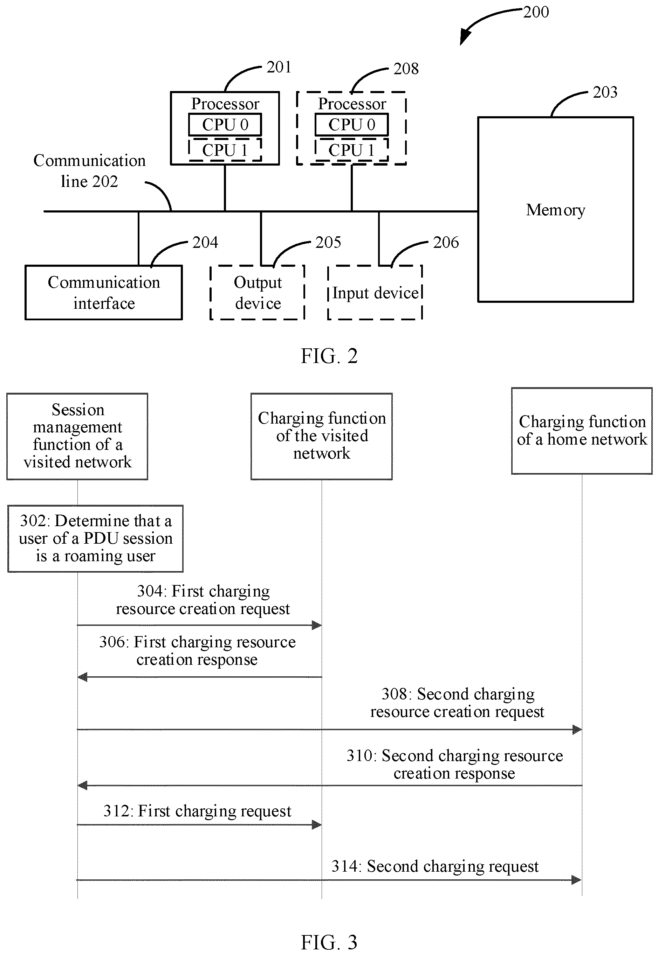

FIG. 2 is a schematic diagram of a structure of hardware of a communication device according to an embodiment of this application. The communication device 200 includes at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path on which information is transferred between the foregoing components.

The communication interface 204 is any apparatus such as a transceiver, and is configured to communicate with another device or a communication network such as the Ethernet, a radio access network (radio access network, RAN), or a wireless local area network (wireless local area network, WLAN).

The memory 203 may be a read-only memory (read-only memory, ROM) or another type of static storage device that can store static information and instructions, or a random access memory (random access memory, RAM) or another type of dynamic storage device that can store information and instructions. The memory 203 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible to a computer, but is not limited thereto. The memory may exist independently, and is connected to the processor through the communication line 202. The memory may alternatively be integrated with the processor.

The memory 203 is configured to store computer executable instructions for executing the solutions in this application, and the processor 201 controls the execution. The processor 201 is configured to execute the computer executable instructions stored in the memory 203, to implement a method provided in the following embodiment of this application.

Optionally, the computer executable instructions in this embodiment of this application may also be referred to as application program code. This is not specifically limited in this embodiment of this application.

In a specific implementation, in an embodiment, the processor 201 may include one or more CPUs.

During specific implementation, in an embodiment, the communication device 200 may include a plurality of processors, for example, the processor 201 and a processor 208 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

The communication device shown in FIG. 2 may be a session management function of a visited network, a roaming charging system, a charging function of a visited network, or a charging function of a home network in embodiments of this application.

The following describes in detail the method provided in embodiments of this application with reference to FIG. 1A, FIG. 1B, and FIG. 2.

FIG. 3 is a schematic flowchart of a charging method in a local breakout roaming scenario according to an embodiment of this application. The method includes the following steps:
Step 302: A session management function of a visited network receives a creation request of a protocol data unit session, and determines that a user of the protocol data unit session is a roaming user.
Step 304: The session management function of the visited network sends a first charging resource creation request to a charging function of the visited network of the roaming user, where the first charging resource creation request is used to request to create a first charging resource for the protocol data unit session.
Step 306: The session management function of the visited network receives a first charging resource creation response message returned by the charging function of the visited network, where the first charging resource creation response message carries an identifier of the first charging resource.
Step 308: The session management function of the visited network sends a second charging resource creation request to a charging function of a home network of the roaming user, where the second charging resource creation request is used to request to create a second charging resource for the protocol data unit session.
Step 310: The session management function of the visited network receives a second charging resource creation response message returned by the charging management function of the home network, where the second charging resource creation response carries an identifier of the second charging resource.
Step 314: The session management function of the visited network sends a first charging request to the charging function of the visited network, where the first charging request includes first charging information and the identifier of the first charging resource, and the first charging information is used to perform roaming charging for the protocol data unit session.
Step 316: Send a second charging request to the charging function of the home network, where the second charging request includes second charging information and the identifier of the first charging resource, and the second charging information is used to perform online charging or converged charging for the protocol data unit session.

According to the foregoing method, the session management function of the visited network separately requests to create charging resources for the protocol data unit session, and sends the first charging information and the second charging information to the charging function of the visited network and the charging function of the home network respectively. Therefore, both the charging function of the visited network and the charging function of the home network can perform charging processing based on the first charging information or the second charging information sent by the session management function of the visited network. In this way, even on a premise of service diversification in a 5G network, a DDR document generated by the charging function of the visited network based on charging information can support roaming account reconciliation, accounting, and conflict resolution by using a usage data report (Usage Data Report, UDR), a billing statement report (Billing Statement Report, BSR) and a DDR, a UDR, a BSR, and the like generated by the charging function of the home network, and a plurality of service account requirements can be met.

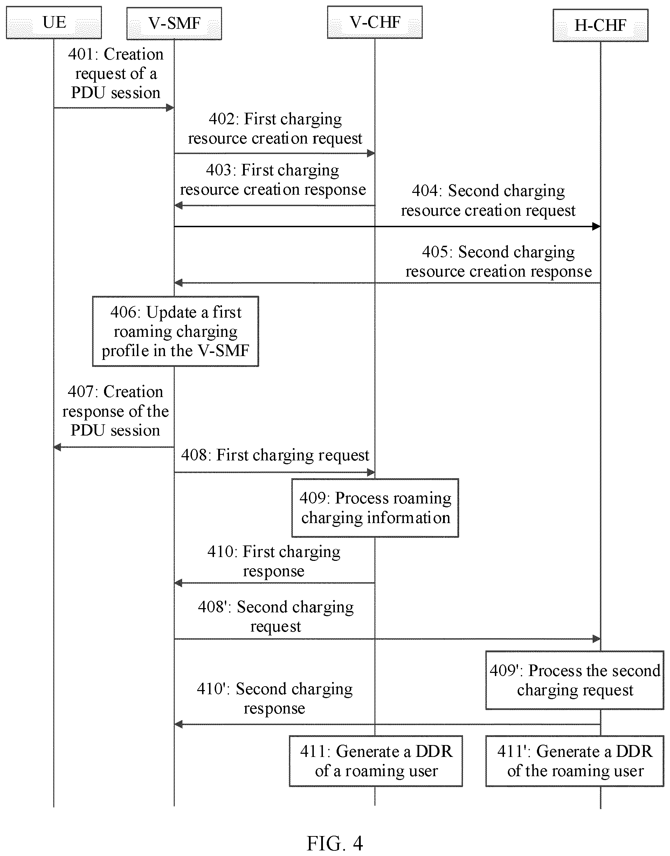

FIG. 4 is a schematic flowchart of a charging method in a roaming scenario according to an embodiment of this application. In this embodiment, a V-SMF creates a first charging session with a V-CHF and a second charging session with an H-CHF for a PDU session of a user. After the PDU session is created, roaming charging information related to the PDU session is reported to the V-CHF and the H-CHF through the created first charging session and the created second charging session respectively. A roaming charging method based on an LBO scenario includes the following steps.

Step 401: User equipment (user equipment, UE) sends a creation request of a PDU session to the V-SMF, where the creation request of the PDU session is used to request to create a PDU session for a user. The creation request of the PDU session carries user information.

After receiving the creation request of the PDU session, the V-SMF determines, based on the user information carried in the creation request, that the user is a roaming user, and obtains a first roaming charging profile that is configured in the V-SMF and that is applicable to the PDU session of the user. The first roaming charging profile configured in the V-SMF is also referred to as default roaming charging profile information.

If the user information is a PLMN identifier of the user equipment that is reported by the user equipment, that the V-SMF determines that the user is a roaming user includes: The V-SMF determines, based on the PLMN identifier of the user equipment that is reported by the user equipment and a PLMN identifier of the V-SMF, that the user is a roaming user. For example, if the PLMN identifier of the user equipment is different from the PLMN identifier of the V-SMF, the V-SMF determines that the user is a roaming user (that is, the user equipment is roaming user equipment).

A manner in which the V-SMF obtains the first roaming charging profile in the V-SMF may be: configuring a roaming charging profile of the user of the visited network on the V-SMF, and obtaining, by the V-SMF, a roaming charging profile corresponding to the roaming user based on the configured roaming charging profile.

402: The V-SMF sends a first charging resource creation request to the V-CHF. The first charging resource creation request is used to request to create a first charging resource for the PDU session of the user. The first charging resource is used by the charging function of the visited network to perform roaming charging processing on the PDU session of the user. The roaming charging processing may include: recording charging process data, receiving a charging request reported by the SMF, and generating a roaming charging data record (including charging data record creation, temporary record, charging data record consolidation, or the like) for charging data in the charging request. The first charging resource includes read user account data, obtained subscription data of the user, charging process data, and/or data of a generated unclosed charging data record.

The first charging resource creation request may carry the first roaming charging profile configured in the V-SMF. The first roaming charging profile in the V-SMF is a default roaming charging profile configured in the V-SMF before the PDU session is created. The default roaming charging profile is used for roaming charging for the PDU session of the user.

The roaming charging profile used for roaming charging for the PDU session includes a roaming charging configuration parameter used for roaming charging for the PDU session.

The first charging resource creation request may further carry first capability indication information. The first capability indication information indicates that the session management function of the visited network supports after the PDU session is created, receiving update information of a roaming charging profile of the visited network (that is, receiving a second roaming charging profile of the visited network) or validating a roaming charging configuration parameter with an effective condition in a first roaming charging profile of the visited network.

Step 403: After receiving the first charging resource creation request, the V-CHF creates the first charging resource for the PDU session based on the first charging resource creation request, and allocates an identifier to the first charging resource. Then, the V-CHF returns a first charging resource creation response to the V-SMF. Optionally, the first charging resource creation response further carries the first roaming charging profile of the visited network.

If the first charging resource creation request carries the first roaming charging profile in the V-SMF, the V-CHF determines, based on the first roaming charging profile in the V-SMF, to update the first roaming charging profile in the V-SMF, and generates the first roaming charging profile of the visited network. The first roaming charging profile of the visited network generated by the V-CHF is used to update the first roaming charging profile in the V-SMF (for example, a default roaming charging profile configured in the V-SMF before the PDU session is created).

The first charging resource creation response includes the first roaming charging profile of the visited network provided by the V-CHF. The first roaming charging profile of the visited network includes a roaming charging configuration parameter immediately used for roaming charging for the PDU session, and/or one or more groups of roaming charging configuration parameters used for roaming charging for the PDU session after the PDU session is created and a corresponding effective condition is met. A roaming charging configuration parameter used for roaming charging for the PDU session after the PDU session is created and a corresponding effective condition is met further includes an effective condition corresponding to the group of roaming charging configuration parameters.

For example, the effective condition is effective time. The first charging resource creation response may carry only one group of roaming charging profile parameters that immediately take effect, and one or more groups of roaming charging profile parameters that take effect at different time after the PDU session is created. If roaming charging profile parameters that take effect at different time are carried, effective time of the group of parameters is further carried. If the first charging resource creation response does not carry effective time of a roaming charging profile parameter, it indicates that the group of parameters take effect immediately when the PDU session is created. The group of parameters take effect immediately, indicating that the VSMF immediately uses the group of parameters for roaming charging for the PDU session after receiving the request. Taking effect after the effective condition is met indicates that the PDU session is used for roaming charging after the effective condition is met.

Refer to Table 1. A roaming charging profile includes two groups of roaming charging configuration parameters. In Table 1, the first group of roaming charging profile parameters do not include a corresponding effective condition, indicating that the first group of roaming charging profile parameters take effect immediately after the V-SMF receives the parameters (that is, the parameters are immediately used for roaming charging for the PDU session). The second group of roaming charging profile parameters include a corresponding effective condition, indicating that the second group of roaming charging profile parameters are used to replace currently effective roaming charging profile parameters when the effective condition is met (if the first group of roaming charging profiles are currently effective, the first group of roaming charging profiles is replaced), and the second group of roaming charging profiles are used for roaming charging for the PDU session. The second group of roaming charging profile parameters indicate that the V-SMF uses the second group of roaming charging profile parameters to generate roaming charging information and report the information to the V-CHF when the effective conditions are met.

**Table 1**

| | | |
|---|---|---|
| Roaming Charging Profile | O_{C} | Roaming charging profile |
| **ProfileGroup1** | O_{C} | First group of roaming charging profile parameters |
| Trigger | O_{C} | Trigger condition for reporting roaming charging information, and this field can appear for a plurality of times |
| Trigger type | O_{C} | Name of a trigger condition (for example, a QoS change, a location change, or the like) |
| Trigger category | O_{C} | Type of the trigger condition, for example, immediate reporting (immediate) or deferred reporting (deferred reporting) |
| Time Limit | O_{C} | This field holds the limit value in seconds when the trigger type is "Expiry of data time limit" (This field holds the limit value in seconds when the trigger type is "Expiry of data time limit") |
| Volume Limit | Oc | This field holds the limit value in octets when the trigger type is "Expiry of data volume limit" (This field holds the limit value in octets when the trigger type is "Expiry of data volume limit") |
| Partial record method | O_{C} | Indicates the partial record method used by a CHF |
| **ProfileGroup2** | O_{C} | Second group of roaming charging profile parameters, where this group of parameters are used to replace currently effective roaming charging profile parameters when this group of parameters take effect |
| Active Time | O_{C} | Effective condition (effective time is used as an example), where the current effective roaming charging profile parameters are replaced at the effective time |
| Trigger | O_{C} | Name of a trigger condition (for example, a QoS change, a location change, or the like) |
| Trigger type | O_{C} | Type of the trigger condition, for example, immediate reporting (immediate) or deferred reporting (deferred reporting) |
| Trigger category | O_{C} | This field holds the limit value in seconds when the trigger type is "Expiry of data time limit" (This field holds the limit value in seconds when the trigger type is "Expiry of data time limit") |
| Time Limit | O_{C} | This field holds the limit value in octets when the trigger type is "Expiry of data volume limit" (This field holds the limit value in octets when the trigger type is "Expiry of data volume limit") |
| Volume Limit | O_{C} | Indicates the partial record method used by the CHF: default or individual |
| Partial record method | OC | |

404: The V-SMF sends a second charging resource creation request to the H-CHF. The second charging resource creation request is used to request the H-CHF to create a second charging resource for the PDU session of the user. The second charging resource is used by the charging function of the home network to perform charging processing on the PDU session of the user. Charging processing includes: obtaining user data, recording charging process data, receiving a charging request reported by the SMF, and performing online charging processing or converged charging processing on carried charging data. The online charging processing includes quota granting, rating, and quota usage deduction. The converged charging processing includes quota granting, rating, quota usage deduction, and generation of a charging data record without a quota (including charging data record creation, temporary record, charging data record consolidation, or the like). The second charging resource includes read user account data, obtained subscription data of the user, charging process data, and/or data of a generated unclosed charging data record.

The second charging resource creation request may further carry second capability indication information. The second capability indication information indicates that the session management function of the visited network supports after the PDU session is created, receiving a second roaming charging profile of the home network or validating a roaming charging configuration parameter with an effective condition in a first roaming charging profile of the home network.

The second charging resource created by the H-CHF for the PDU session of the user is used by the H-CHF to perform converged charging processing on a service data flow on which online charging is performed and a service data flow on which offline charging is performed in the PDU session, or is used by the H-CHF to perform online charging processing on only a service data flow on which online charging is performed in the PDU session. The service data flow on which online charging is performed is a service data flow with quota management. That is, the service data flow corresponding to the second charging information may be a service data flow for which a quota needs to be applied to the H-CHF and quota usage information needs to be reported. The online charging processing performed by the H-CHF on the service data flow on which online charging is performed includes rating, account deduction, and the like.

The second charging resource creation request may further carry the roaming charging profile in the V-SMF used for roaming charging for the PDU session. The roaming charging profile used for roaming charging for the PDU session in the second charging resource creation request may be the first roaming charging profile configured in the V-SMF (that is, the default roaming charging profile configured in the V-SMF, and a premise for carrying the roaming charging profile is that the V-CHF does not update a roaming profile). The roaming charging profile used for roaming charging for the PDU session in the second charging resource creation request may also be the first roaming charging profile of the visited network (if the V-CHF delivers an updated roaming charging profile and replaces the default roaming charging profile). An updated roaming charging profile obtained by using the first roaming charging profile of the visited network delivered by the V-CHF is also referred to as a second roaming charging profile in the V-SMF.

If the V-CHF delivers a roaming charging profile parameter including an effective condition, there are a plurality of groups of roaming charging profile parameters in the roaming charging profile used for the PDU session in the V-SMF. In this case, the roaming charging profile used for the PDU session may not include the roaming charging profile parameter with the effective condition, or include the roaming charging profile parameter with the effective condition and the corresponding effective condition (for example, effective time). In other words, the second charging resource creation request may include only a group of roaming charging profile parameters that take effect immediately when the PDU session is created (for example, the roaming charging configuration parameter that takes effect immediately when the PDU session is created in the first roaming charging profile information in the V-SMF or the second roaming charging profile information in the V-SMF). The second charging resource creation request may further include a plurality of groups of roaming charging profile parameters with different effective conditions, and carries an effective condition of each group of roaming charging profile parameters.

Step 405: After receiving the second charging resource creation request, the H-CHF creates the second charging resource for the PDU session of the user based on the second charging resource creation request, allocates an identifier to the second charging resource, and then returns a second charging resource creation response to the V-SMF.

The second charging resource creation response may further carry the first roaming charging profile of the home network sent by the H-CHF. The first roaming charging profile of the home network includes a roaming charging configuration parameter immediately used for roaming charging for the PDU session, and/or one or more groups of roaming charging configuration parameters used for roaming charging for the PDU session after the PDU session is created and a corresponding effective condition is met.

The H-CHF determines that the first roaming charging profile of the home network needs to be delivered (for example, the H-CHF determines to update the roaming charging profile in the V-SMF that is used for roaming charging for the PDU session and that is carried in the second charging resource creation request), and generates the first roaming charging profile of the home network. The first roaming charging profile of the home network generated by the H-CHF may be used to update a roaming charging profile in the V-SMF (for example, the first roaming charging profile in the V-SMF or the second roaming charging profile in the V-SMF).

That the H-CHF determines to update the roaming charging profile carried in the second charging resource creation request includes: The H-CHF determines, based on subscription information of the user and/or based on a roaming agreement (for example, dynamically provided RG information or service information or slice information included in the roaming agreement), to update the roaming charging profile of the user carried in the second charging resource creation request. For example, the subscription information of the user includes assurance service information subscribed to by the user, and the H-CHF determines that redundant transmission (Redundant transmission) needs to be added to the roaming charging profile of the user that has been obtained by the H-CHF as a trigger (trigger). If the roaming agreement of the user indicates that a service (for example, a VR service) can be separately counted, it is determined that service information of the separately counted service needs to be added to the roaming charging profile of the user that has been obtained by the H-CHF, for example, an identifier and/or a rate group of the separately counted service.

The first roaming charging profile of the visited network or the first roaming charging profile of the home network may include a trigger used for the PDU session, a trigger type, and/or a trigger limit (trigger limit). The roaming charging profile of the visited network or the first roaming charging profile of the home network may further include other subsequently extended roaming charging profile parameters.

The first roaming charging profile of the home network may include only parameters used to update one group of effective roaming charging profiles sent by the V-SMF, or may include parameters used to update a plurality of groups of roaming charging profiles with different effective conditions, and each group of roaming charging profile parameters include corresponding effective conditions.

For example, the effective condition is effective time. The second charging resource creation response may carry only one group of roaming charging profile parameters that take effect immediately. The second charging resource creation response may alternatively carry one group of roaming charging profile parameters that immediately take effect, and one or more groups of roaming charging profile parameters that take effect at different time after the PDU session is created. The roaming charging profile parameters that take effect at different time after the PDU session is created are referred to as roaming charging profile parameters that take effect with a delay. The second charging resource creation response may further carry effective time of each group of roaming charging profile parameters that take effect with a delay. If the first charging resource creation response does not carry effective time of a roaming charging profile parameter, it indicates that the group of roaming charging profile parameters take effect immediately when the PDU session is created.

For the first roaming charging profile of the home network, refer to the example first roaming charging profile of the visited network in Table 1. Details are not described again in this embodiment of this application.

406: After receiving the second charging resource creation response returned by the H-CHF, the V-SMF updates the first roaming charging profile in the V-SMF by using the first roaming charging profile of the home network.

The V-SMF may replace a corresponding parameter in the first roaming charging profile in the V-SMF or a corresponding parameter in the second roaming charging profile in the V-SMF with an immediately effective roaming charging profile parameter in the first roaming charging profile of the home network. If the first roaming charging profile of the home network includes a roaming charging profile parameter that takes effect after the PDU session is created and an effective condition is met, the V-SMF stores the roaming charging profile parameter that takes effect after the PDU session is created and the effective condition is met in the first roaming charging profile of the home network. When the effective condition is met, the V-SMF uses the roaming profile parameter corresponding to the effective condition for the PDU session.

In this embodiment of this application, updating a roaming charging profile is replacing a parameter group in the roaming charging profile in the V-SMF with a parameter group in a received roaming charging profile.

Optionally, the updating, by the V-SMF, the roaming charging profile is updating a parameter of the roaming charging profile configured in the V-SMF by using a parameter that has taken effect in the roaming charging profile of the visited network, or updating an existing roaming charging profile (for example, the second roaming charging profile) by using a parameter that has taken effect in the roaming charging profile of the home network. For parameters that do not take effect, the V-SMF may first store the group of parameters that do not take effect, and update the group of parameters that do not take effect after an effective condition of the group of parameters that do not take effect is met.

Step 407: The V-SMF sends a PDU session creation response to the UE, to indicate that a session (for example, a PDU session) from the user to a data network (data network) is created.

Before step 407, the V-SMF determines that the first charging resource creation response returned by the V-CHF and the second charging resource creation response returned by the H-CHF have been received.

It should be noted that there is no time sequence between step 407 and step 406.

Further, after the V-SMF receives the second charging resource creation response returned by the H-CHF, if the V-SMF uses the first roaming charging profile of the home network to update the first roaming charging profile in the V-SMF or the second roaming charging profile in the V-SMF, the V-SMF sends an updated user usage information collection and reporting policy to a user plane function entity of the visited network (namely, the V-UPF) based on a third roaming charging profile in the V-SMF, to adjust a trigger condition for the V-UPF to report charging information to the V-SMF.

After step 406, that is, after the V-SMF receives the first roaming charging profile of the home network, the V-SMF further sends, to the V-CHF, the roaming charging configuration parameter immediately used for roaming charging for the PDU session in the first roaming charging profile of the home network. Alternatively, after an effective condition included in the first roaming charging profile of the home network is met, the V-SMF sends, to the V-CHF, the roaming charging configuration parameter used for roaming charging for the PDU session after the effective condition is met in the first roaming charging profile of the home network. In another implementation, after receiving the first roaming charging profile of the home network, the V-SMF sends the first roaming charging profile of the home network to the V-CHF (including a roaming charging configuration parameter immediately used for roaming charging for the PDU session and a roaming charging configuration parameter with an effective condition that is used for roaming charging for the PDU session).

In order to support reporting the first roaming charging profile of the home network to the V-CHF after the first roaming charging profile of the home network is received or after the effective condition included in the first roaming charging profile of the home network is met, a state of a "roaming charging profile change" trigger is set to an active state on the session management function of the visited network, and a type of the trigger (that is, the trigger named "roaming charging profile change") is set. The "roaming charging profile change" trigger is used to trigger sending of the roaming charging information and the effective roaming charging profile to the V-CHF when the roaming charging profile used for the PDU session of the user sent by the H-CHF takes effect. Taking effect includes taking effect immediately or taking effect when an effective condition is met.

When the type of the "roaming charging profile change" trigger is immediate reporting, when a parameter in the first roaming charging profile of the home network takes effect for the PDU session, the roaming charging configuration parameter used for roaming charging for the PDU session is sent to the charging function of the visited network; or when the type of the "roaming charging profile change" trigger is deferred reporting, when a parameter in the first roaming charging profile of the home network is used for the PDU session, the roaming charging configuration parameter used for roaming charging for the PDU session is stored, and the roaming charging configuration parameter used for roaming charging for the PDU session is carried in a first charging request sent to the V-CHF next time.

A default state and a default trigger type of the "roaming charging profile change" trigger are preconfigured on the V-SMF. During creation of the PDU session and after the PDU session is created, the V-CHF may change the state of the "roaming charging profile change" trigger and the type of the trigger in the first charging resource creation response. It should be noted that the H-CHF cannot change the active state and the type of the trigger.

Step 408: The V-SMF sends a first charging request to the V-CHF, where the first charging request includes first charging information and the identifier of the first charging resource.

The first charging information is used to perform roaming charging for the PDU session of the user. Roaming charging means that the V-CHF generates a roaming charging data record for the roaming user by using the first charging information, to support subsequent roaming accounting. The first charging information is information that is reported by the V-UPF and that is used for roaming accounting. The first charging information includes only reporting of roaming charging information, and does not involve quota management. When a reporting condition is met, the V-SMF reports the charging information of the user to the V-CHF. The reporting condition may be a trigger of an immediate type in an effective roaming charging configuration parameter of a roaming charging profile in the V-SMF.

If the reporting condition is met, the V-SMF validates the third roaming charging profile (that is, the roaming charging profile in the V-SMF updated by using the first roaming charging profile of the home network) at a same moment. The roaming charging profile changes, the V-SMF further sends, to the V-CHF, the third roaming charging profile in the V-SMF and roaming charging information (including service usage) before the third roaming charging profile takes effect, to indicate the updated roaming charging profile to the V-CHF. If the third roaming charging profile in the V-SMF takes effect, it indicates that when the trigger condition of the "roaming charging profile change" trigger is met, the V-SMF updates a roaming charging profile in the V-SMF by using the first roaming charging profile of the home network, to obtain the third roaming charging profile in the V-SMF.

The V-SMF sends the first charging information based on a roaming charging profile (for example, the third roaming charging profile in the V-SMF) in the V-SMF used for the PDU session. The V-SMF sends charging information of a service data flow of the entire PDU session to the V-CHF. The first charging information includes charging information corresponding to a QoS flow and/or charging information corresponding to a service. The service herein is a service data flow corresponding to a rate group and/or a service identifier.

The first charging request sent by the V-SMF to the V-CHF may further include third charging information and indication information corresponding to the third charging information. The third charging information is usage of a service data flow corresponding to the second charging information sent by the V-SMF to the H-CHF. The service data flow corresponding to the second charging information is a service data flow with quota management or a service data flow without quota management. The service data flow with quota management is a service data flow for which the H-CHF applies for a quota and reports quota usage. When the service data flow is a service data flow with quota management, the indication information indicates that the H-CHF performs online charging processing on the usage that is of the service data flow and that is included in the third charging information. The online charging processing in this embodiment of this application includes quota granting, rating, account quota usage information deduction, and the like. When the service data flow is a service data flow without quota management, the indication information indicates that the H-CHF performs offline charging processing on the usage that is of the service data flow and that is included in the third charging information. The offline charging processing in this embodiment of this application includes generating a charging data record based on reported charging information.

In this embodiment of this application, traffic with quota management and traffic without quota management may have a same rating group, or may have different rating groups.

The first charging request further includes a slice identifier of the home network in which the PDU session is located and/or a slice identifier of the visited network.

Information carried in the first charging request is shown in Table 2:

**Table 2**

| Session identifier | PDU session identifier |
|---|---|
| Subscriber identifier | Subscriber identifier |
| NF consumer identification | Network function consumer identification (for example, SMF identifier) |
| PDU session charging information | PDU session charging information |
| HPLMN NETWORK SLICE ID | Home network slice identifier |
| VPLMN NETWORK SLICE ID | Visited network slice identifier |
| Roaming information | Roaming charging information |
| UPF ID | UPF identifier |
| Multiple Service Container | Charging information of a service flow, where each service container includes one piece of charging information of the service flow, such as rating group information, a service identifier, a trigger, a service identifier, volume, duration, and the like |
| **Rating group** | Rating group corresponding to the service flow |
| Service Identifier | Service identifier corresponding to the service flow |
| triggers | Trigger that triggers the generation of the charging information of the service flow |
| Trigger timestamp | Time point at which the trigger is met |
| time | Duration (duration of using the service flow) |
| Total volume | Total volume (total volume of the service flow) |
| Uplink volume | Uplink volume (uplink volume of the service flow) |

Step 409: The V-CHF processes roaming charging information of the PDU session based on the received first charging request.

That the V-CHF processes the roaming charging information of the PDU session includes: The V-CHF generates a roaming charging data record (Charging Data Record, CDR) based on the received roaming charging information. The roaming CDR includes the roaming charging information sent by the V-SMF.

The roaming charging information of the PDU session includes the first charging information, and the first charging information includes charging information corresponding to a QoS flow and/or charging information corresponding to a service. The V-CHF may further combine the roaming charging information of the PDU session. The service in the charging information corresponding to the service may be identified by a rate group and/or a service identifier.

When the roaming charging information received by the V-CHF further includes the third charging information and the indication information corresponding to the third charging information, the roaming charging data record generated by the V-CHF includes the third charging information and the indication information corresponding to the third charging information.

Step 410: The V-CHF returns a first charging response to the V-SMF.

The first charging response includes result information of processing the roaming charging information of the PDU session.

Step 408': The V-SMF sends a second charging request to the H-CHF, where the second charging request includes the second charging information.

The second charging information is used by the H-CHF to perform online charging processing or converged charging processing on the PDU session of the user. Specifically, the V-SMF interacts with the H-CHF to perform online charging processing on a service data flow whose charging method is online charging in the PDU session, including quota granting, rating, account quota usage information deduction, and the like. Alternatively, the V-SMF interacts with the H-CHF to perform converged charging processing on a service data flow whose charging method is online charging and/or offline charging in the PDU session. The charging processing includes quota granting, rating, account quota usage information deduction, offline charging data record generation, and the like. The second charging information sent to the charging function of the home network includes online charging information of a service data flow on which online charging is performed in the PDU session, or includes converged charging information of a service data flow on which online charging is performed and a service data flow on which offline charging is performed in the PDU session. The online charging information is charging information with quota management. The online charging information is used to apply for a quota or report quota usage information. The converged charging information includes online charging information and/or offline charging information. The offline charging information is charging information without quota management, and is used to report usage.

Activating a charging rule of the PDU session of the user on the V-SMF may also be delivering and activating a dynamic charging rule by a policy control function or delivering a preconfigured charging rule. A charging method and a corresponding rating group for a service data flow in the PDU session are determined based on the charging rule, and the second charging information is generated and sent based on the charging method and the rating group. That is, the charging rule indicates whether online charging or offline charging is performed on the service data flow in the PDU session. A method for delivering and activating a charging rule by the PCF is the conventional technology, and details are not described in this embodiment of this application.

The second charging request further includes the slice identifier of the home network in which the PDU session is located.

Step 409': The H-CHF performs charging processing on the second charging request.

The second charging information in the second charging request is used to apply for a quota for the service data flow on which online charging is performed in the PDU session and/or report quota usage, and/or is used to apply for a quota for the service data flow on which online charging is performed in the PDU session, report quota usage, and report offline usage for the service data flow on which offline charging is performed. The second charging information includes online charging information of the service data flow on which online charging is performed in the PDU session, and/or the second charging information includes converged charging information of the service data flow on which online charging is performed and the service data flow on which offline charging is performed in the PDU session.

The performing online charging processing and/or converged charging processing on the second charging information includes the following method:

If the V-SMF interacts with the H-CHF to perform online charging processing on a service data flow whose charging method is online charging in the PDU session, the charging processing performed on the second charging request includes quota granting, rating, account quota usage information deduction, and the like. If the V-SMF interacts with the H-CHF to perform converged charging processing on a service data flow whose charging method is online charging and/or offline charging in the PDU session, the charging processing performed on the second charging request includes quota granting, rating, account quota usage information deduction, offline charging data record generation, and the like.

Step 410': The H-CHF returns a second charging response to the V-SMF.

The second charging response includes result information of processing the second charging information.

Step 411: When determining to generate a detailed data record (detailed data record, DDR), the V-CHF generates a DDR of the roaming user based on the roaming charging data record.

The V-CHF generates the DDR based on a time point or time periodicity specified in the roaming agreement.

Specifically, the DDR of the roaming user is generated based on the roaming charging data record of the PDU session, and the DDR includes charging information of a QoS flow in the PDU session of the user and/or charging information of a service in the PDU session of the user. Further, the generating the DDR of the roaming user further includes: writing, by the V-CHF, a home network slice identifier and/or a visited network slice identifier in the roaming charging data record into the DDR. The roaming charging system of the V-network writes a charging ID in the CDR or charging information (such as an SMF address, a RAT type, and the like) of another PDU session into the DDR.

If the H-CHF performs charging processing on the service data flow in the PDU session, the V-CHF writes charging information of the service data flow on which the H-CHF performs charging processing into the DDR, and identifies that the H-CHF has charged the service data flow. Further, if the H-CHF performs online charging on the service data flow in the PDU session, it may be further identified that the H-CHF has performed online charging. If the H-CHF performs offline charging on the service data flow in the PDU session, it may be further identified that the H-CHF has performed offline charging.

The DDR generated by the V-CHF is shown in Table 3:

**Table 3**

| **Field Name** | **Description** |
|---|---|
| Record Type | The type of record in DDR |
| Charging ID | Charging identifier |
| Duration | Duration of using a service by a user |
| Data Volume Incoming | Data volume incoming (uplink data volume) |
| Data Volume Outgoing | Data volume outgoing (downlink data volume) |
| RAT | Radio access network type (for example, 5GNR, LTE, and the like) |
| QCI | Quality of service identifier |
| RGID | Rating group identifier |
| Service Identifier | Service identifier |
| VPLMN Network Slice Info | V-network slice identifier |
| HPLMN Network Slice Info | H-network slice identifier |
| Serving Network | Service network |
| Cell identifier | Cell identifier |
| Location Area Code | Location area code |
| Charge | Indicates whether the DDR data is charged |

Step 411': When determining to generate a detailed data record (detailed data record, DDR), the roaming charging system of the H-network generates the DDR of the roaming user based on the online charging information or the converged charging information.

According to this method, the session management function entity of the visited network separately creates the first charging session with the V-CHF and the second charging session with the H-CHF for the PDU session of the user, and reports roaming charging information to the V-CHF and the H-CHF through the two charging sessions. Therefore, the roaming charging method in the LBO scenario is implemented. In addition, because the V-CHF and the H-CHF separately send the roaming charging profiles to the V-SMF, roaming charging information that supports a plurality of account requirements may be generated based on the roaming charging profiles. In this way, the roaming charging system can perform flexible roaming accounting based on different roaming charging profiles, and provide data support for conflict resolution when a conflict occurs.

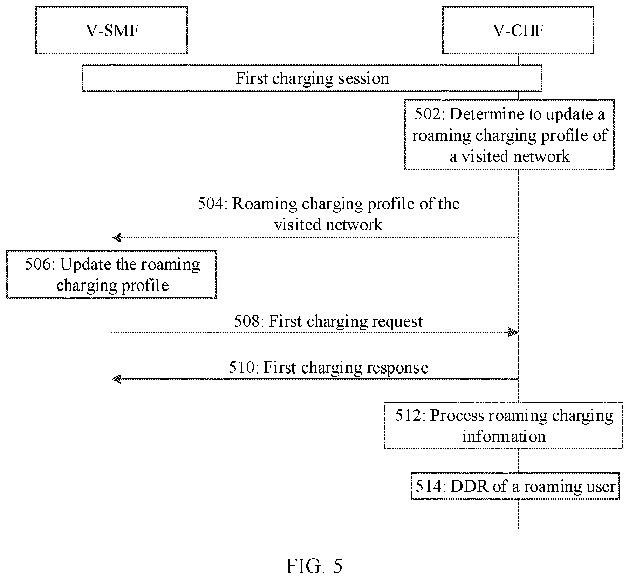

FIG. 5 is a schematic flowchart of a method in which a user normally uses a data service, a V-SMF receives a second roaming charging profile of a visited network sent by a V-CHF during a PDU session in an LBO roaming scenario, to update a third roaming charging profile in the V-SMF, so as to obtain a fourth roaming charging profile in the V-SMF according to an embodiment of this application. In this embodiment, the method includes the following steps.

Step 502: The V-CHF determines to send a new roaming charging profile of the visited network to the V-SMF, and generates the second roaming charging profile of the visited network.

During the PDU session, the user normally uses the data service, a first charging session is created between the V-CHF and the V-SMF, and the V-CHF creates a first charging resource for the PDU session, and allocates an identifier to the first charging resource. The V-CHF exchanges information with the V-SMF to complete reporting of visited network roaming charging information of the roaming user (that is, steps 408 to 410 are performed).

The V-CHF may determine, based on a change of a slice (for example, a change of a slice specification), and/or switching of a roaming policy at a specific time point, to update a first roaming charging profile of the visited network or update a third roaming charging profile in the V-SMF sent by the V-SMF to the V-CHF.

The information that the V-CHF determines to update may be any parameter in the first roaming charging profile of the visited network, any parameter in the third roaming charging profile in the V-SMF sent by the V-SMF to the V-CHF, or any parameter in a first roaming charging profile in the V-SMF sent by the V-SMF to the V-CHF (if the V-CHF and the H-CHF do not update the first roaming charging profile in the V-SMF in a PDU session creation process). The parameter that the V-CHF determines to update may be a trigger corresponding to the PDU session, a trigger type, a trigger limit, or a subsequently extended roaming profile parameter.

The V-CHF may determine in advance to change any parameter in the first roaming charging profile of the visited network, any parameter in the third roaming charging profile in the V-SMF, or any parameter in the first roaming charging profile in the V-SMF at a time point during the PDU session. The time point at which the roaming charging profile is changed during the session may be a time point at which the roaming policy is switched. The V-CHF may include, in the second roaming charging profile of the visited network, the group of parameters that take effect at a time point during the PDU session, and an effective condition (for example, effective time) of the group of parameters is carried.

The second roaming charging profile of the visited network generated by the V-CHF may include a group of roaming charging profile parameters that need to take effect immediately, and/or one or more groups of roaming charging configuration parameters that take effect after an effective condition is met and the corresponding effective condition. If the second roaming charging configuration parameter of the visited network generated by the V-CHF includes one or more groups of parameters that subsequently take effect in different effective conditions, the second roaming charging configuration parameter of the visited network generated by the V-CHF further includes the effective conditions of the parameters that subsequently take effect in different effective conditions. One or more groups of parameters that take effect at a time point after the second roaming charging configuration parameter of the visited network is sent to the V-SMF are referred to as one or more groups of second roaming charging profile parameters of the visited network that take effect with a delay.

The second roaming charging configuration parameter of the visited network generated by the V-CHF may include only a parameter that needs to be updated, or may include all parameters of the second roaming charging profile of the visited network.

Step 504: The V-CHF sends, to the V-SMF, the second roaming charging profile of the visited network generated by the V-CHF.

If the V-CHF is processing a roaming charging request of the PDU session sent by the V-SMF, the V-CHF may use a first charging response message to carry the generated second roaming charging profile of the visited network. If the V-CHF is not processing a roaming charging request of the PDU session sent by the V-SMF, the V-CHF may send a first charging notification message to the V-SMF, to indicate the V-SMF to send a first charging request (the first charging request carries roaming charging information) to the V-CHF, and then use a response message of the first charging request to carry the generated second roaming charging profile of the visited network. Alternatively, if the V-CHF is not processing a roaming charging request of the PDU session sent by the V-SMF, the V-CHF may send a first charging notification message to the V-SMF. The first charging notification message carries the generated second roaming charging profile of the visited network.

Step 506: After receiving the second roaming charging profile of the visited network, the V-SMF updates an existing roaming charging profile in the V-SMF by using the second roaming charging profile of the visited network. The existing roaming charging profile in the V-SMF may be the first roaming charging profile in the V-SMF, a second roaming charging profile in the V-SMF, or the third roaming charging profile in the V-SMF.

After the PDU session is created, the V-SMF receives a first charging notification message sent by the charging function of the visited network or a first charging response message corresponding to the first charging request. The first charging response message or the first charging notification message includes the second roaming charging profile of the visited network. The second roaming charging profile of the visited network includes a roaming charging configuration parameter immediately used for roaming charging for the PDU session, and/or one or more groups of roaming charging configuration parameters used for roaming charging for the PDU session after an included corresponding effective condition is met.

The V-SMF may determine whether the second roaming charging profile of the visited network takes effect, and then perform step 506. For example, the V-SMF may replace a corresponding parameter in the existing roaming charging profile in the V-SMF with an effective parameter in the second roaming charging profile of the visited network. If the second roaming charging profile of the visited network includes a parameter that takes effect with a delay, the V-SMF stores the parameter that takes effect with a delay in the second roaming charging profile of the visited network, and performs updating by using the parameter that takes effect with a delay included in the second roaming charging profile of the visited network when an effective condition is met. A roaming charging profile updated by using the second roaming charging profile of the visited network is referred to as the fourth roaming charging profile in the V-SMF.

After updating the corresponding parameter in the existing roaming charging profile in the V-SMF by using the effective parameter in the second roaming charging profile of the visited network, the V-SMF may further determine to update a usage information collection and reporting policy of the user, and send the updated usage information collection and reporting policy of the user to a UPF. The existing roaming charging profile in the V-SMF may be the first roaming charging profile in the V-SMF, the second roaming charging profile in the V-SMF, or the third roaming charging profile in the V-SMF.

Step 508 to step 514: The V-SMF sends the first charging request to the V-CHF based on the updated roaming charging profile when a reporting condition is met.

After receiving the first charging request, the V-CHF processes the roaming charging request.

After performing step 506, the V-SMF may further send the fourth roaming charging profile in the V-SMF to the H-CHF. The fourth roaming charging profile in the V-SMF may be carried in a second charging request sent by the V-SMF to the H-CHF. After receiving the second charging request, if the H-CHF determines that a roaming charging profile used for the PDU session of the user needs to be updated, the H-CHF performs steps 602 to 606.

For specific descriptions of steps 508 to 514, refer to the descriptions of steps 408 to 411. Details are not described in this embodiment of this application again.

In this method, the V-CHF may actively trigger to update a roaming charging profile of the user during the PDU session. In this way, the roaming charging profile can be dynamically updated to meet various service requirements.

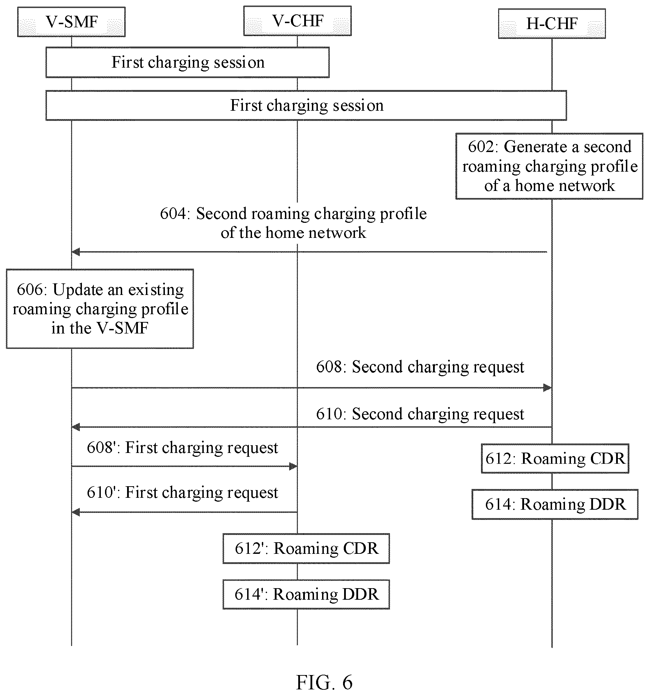

FIG. 6 is a schematic flowchart of a method in which a user normally uses a data service, a V-SMF receives a second roaming charging profile of a home network sent by an H-CHF during a PDU session in an LBO roaming scenario, to update a roaming charging profile in the V-SMF, so as to obtain a fifth roaming charging profile in the V-SMF according to an embodiment of this application. In this embodiment, the method includes the following steps.

Step 602: The H-CHF determines to send a new roaming charging profile of the home network to the V-SMF, and generates the second roaming charging profile of the home network.

During the PDU session, the UE may normally use a data service. A first charging session is created between a V-CHF and the V-SMF, and the V-CHF creates a first charging resource for the PDU session, and allocates an identifier to the first charging resource. The V-CHF exchanges information with the V-SMF to complete reporting of visited network roaming charging information of a roaming user (that is, steps 408 to 410 are performed). A second charging session is created between the H-CHF and the V-SMF, and the H-CHF creates a second charging resource for the PDU session, and allocates an identifier to the second charging resource. The H-CHF exchanges information with the V-SMF to complete reporting of home network roaming charging information of the roaming user (that is, steps 408' to 410' are performed).

During the PDU session, the H-CHF determines to update the roaming charging profile used for the PDU session of the user, and generates an updated roaming charging profile used for the PDU session of the user. The updated roaming charging profile used for the PDU session of the user includes a roaming charging configuration parameter immediately used for roaming charging for the PDU session, and/or one or more groups of roaming charging configuration parameters used for roaming charging for the PDU session of the user after the DPU session is created and a corresponding effective condition is met, and the corresponding effective condition.

The H-CHF may determine to update a roaming charging profile in the V-SMF based on a change of user subscription information, a change of a slice (for example, a change of a slice specification), a change of a user account, or switching of a roaming policy at a specific time point. An updated roaming charging profile in the V-SMF determined by the H-CHF may be a first roaming charging profile in the V-SMF, a second roaming charging profile in the V-SMF, a third roaming charging profile in the V-SMF, or a fourth roaming charging profile in the V-SMF.

Information that the H-CHF determines to update may be any parameter in a roaming charging profile in the V-SMF, for example, a trigger corresponding to the PDU session, a trigger type, a trigger limit, or a subsequently extended roaming profile parameter.

The H-CHF may determine in advance that the roaming charging profile parameter in the V-SMF is to be changed at a time point (for example, at a time point or a time point of switching a roaming policy) during the PDU session. The H-CHF may include, in the second roaming charging configuration parameter of the home network, the group of parameters that take effect at a time point during the PDU session, and an effective condition (for example, effective time) of the group of parameters is carried.

The second roaming charging profile of the home network generated by the H-CHF may include a group of roaming charging profile parameters that need to take effect immediately, and/or one or more groups of roaming charging configuration parameters that take effect after an effective condition is met and the corresponding effective condition. If the second roaming charging profile of the home network generated by the H-CHF includes one or more groups of parameters that take effect after being sent to the V-SMF, the second roaming charging profile of the home network generated by the H-CHF further includes an effective condition corresponding to each group of roaming charging configuration parameters. One or more groups of parameters that take effect at a time point after the second roaming charging configuration parameter of the home network is sent to the V-SMF are referred to as one or more groups of second roaming charging profile parameters of the home network that take effect with a delay.

The second roaming charging configuration parameter of the visited network generated by the H-CHF may include only a parameter that needs to be updated, or may include all parameters of the roaming charging profile of the visited network.

Step 604: The H-CHF sends, to the V-SMF, the second roaming charging profile of the home network generated by the H-CHF.

If the H-CHF is processing a second charging request of the PDU session sent by the V-SMF, the H-CHF may use a response message of the second charging request to carry the generated second roaming charging profile of the home network. If the H-CHF is not processing the second charging request of the PDU session sent by the H-SMF, the H-CHF may send a notification message to the V-SMF, to indicate the V-SMF to send the second charging request to the H-CHF, and then use the response message of the second charging request to carry the generated second roaming charging profile of the home network. Alternatively, if the H-CHF is not processing the roaming charging request of the PDU session sent by the V-SMF, the H-CHF may send a notification message to the V-SMF. The notification message carries the generated second roaming charging profile of the home network.

Step 606: After receiving the second roaming charging profile of the home network, the V-SMF to update an existing roaming charging profile in the V-SMF by using the second roaming charging profile of the home network. The existing roaming charging profile in the V-SMF may be the second or third roaming charging profile in the V-SMF after step 406 (that is, the first roaming charging profile of the visited network and/or the first roaming charging profile of the home network are/is used for update) is performed, or the fourth roaming charging profile in the V-SMF (that is, the second roaming charging profile of the visited network is used for update) in step 506. The roaming charging profile obtained through updating by using the second roaming charging profile of the home network is referred to as the fifth roaming charging profile in the V-SMF.

Specifically, after the PDU session is created, a second charging notification message sent by the V-CHF or a second charging response message corresponding to the second charging request is received. The second charging response message or the second charging notification message includes the second roaming charging profile of the home network. The second roaming charging profile of the home network includes a roaming charging configuration parameter immediately used for roaming charging for the PDU session of the user, and/or one or more groups of roaming charging configuration parameters used for roaming charging for the PDU session of the user after an included corresponding effective condition is met.

The V-SMF may perform step 606 after determining whether the second roaming charging profile of the home network takes effect. For example, the V-SMF may replace a corresponding parameter in the existing roaming charging profile in the V-SMF with an effective parameter in the second roaming charging profile of the home network. If the second roaming charging profile of the home network includes a parameter that takes effect with a delay, the V-SMF stores the parameter that takes effect with a delay in the second roaming charging profile of the home network, and performs updating by using the parameter that takes effect with a delay in the second roaming charging profile of the home network when an effective condition is met.

After replacing the corresponding parameter in the third roaming charging profile in the V-SMF or the corresponding parameter in the fourth roaming charging profile in the V-SMF with the effective parameter in the second roaming charging profile of the home network, the V-SMF may further determine to update a usage information collection and reporting policy of the user, and send an updated usage information collection and reporting policy of the user to a UPF.

After step 606, the method further includes: after receiving the second roaming charging profile of the home network, sending, to the charging function of the visited network, a roaming charging configuration parameter immediately used for roaming charging for the PDU session in the second roaming charging profile of the home network, or after an effective condition included in the second roaming charging profile of the home network is met, sending, to the charging function of the visited network, a roaming charging configuration parameter used for roaming charging for the PDU session after the effective condition is met in the second roaming charging profile of the home network. The V-SMF may also send the roaming charging information (including service usage) obtained at the end of the sending.

In another implementation, after receiving the first roaming charging profile of the home network, the V-SMF sends the first roaming charging profile of the home network (including a roaming charging configuration parameter immediately used for roaming charging for the PDU session and a roaming charging configuration parameter with an effective condition used for roaming charging for the PDU session after the effective condition is met) to the charging function of the visited network. The V-SMF may also send the obtained roaming charging information (including the service usage). The V-SMF may send the first roaming charging profile of the home network by using a first charging request.

After the V-SMF receives the second roaming charging profile of the home network, or after an effective condition included in the second roaming charging profile of the home network is met (for example, a condition of a "roaming charging profile change" trigger on the V-SMF is met), the "roaming charging profile change" trigger triggers sending of the roaming charging configuration parameter used for roaming charging for the PDU session and the collected roaming charging information to the charging function of the visited network, or triggers saving of the effective roaming charging configuration parameter in the second roaming charging profile of the home network and the collected roaming charging information, and using a first charging request sent to the V-CHF next time to carry the effective roaming charging configuration parameter in the second roaming charging profile of the home network and the collected roaming charging information.

Steps 608 to 614: The V-SMF collects charging information based on the updated roaming charging profile, and sends a second charging request to the H-CHF when a reporting condition is met.

After receiving the second charging request, the H-CHF processes the second charging request.

For specific descriptions of steps 608 to 614, refer to the descriptions of steps 408 to 411. Details are not described in this embodiment of this application again.

In this method, the H-CHF may actively trigger to update a roaming charging profile of the user during the PDU session. In this way, the roaming charging profile can be dynamically updated to meet various service requirements, and the charging information of the visited network and the home network can be synchronized, to support accounting between operators and resolving a data conflict between operators.

In embodiments of this application, the devices such as the terminal 114 and the control plane function entity 106 may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

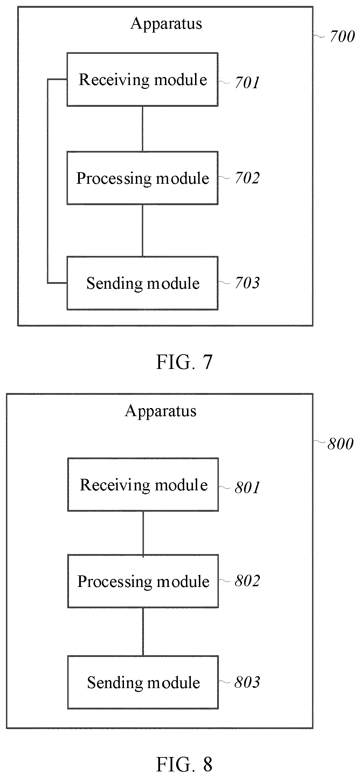

For example, when the function modules are obtained through division in an integrated manner, FIG. 7 is a schematic diagram of a structure of an apparatus 700. The apparatus 700 may be the session management function 101 of the visited network, or may be a chip in the session management function 101 of the visited network in the foregoing embodiment. Alternatively, the apparatus 700 may be the charging trigger device 110 in FIG. 1A, or may be a chip in the charging trigger device 110. This is not specifically limited in this embodiment of this application. As shown in FIG. 7, the apparatus includes a receiving module 701, a processing module 702, and a sending module 703. The receiving module is configured to receive a creation request of a data connection session.

The processing module is configured to determine that a user of the data connection session is a roaming user.

The sending module is configured to send a first charging resource creation request to a roaming charging system of a visited network of the roaming user, where the first charging resource creation request is used to request to create a first charging resource for the data connection session.

The receiving module is further configured to receive a first charging resource creation response message returned by the roaming charging system of the visited network, where the first charging resource creation response message carries an identifier of the first charging resource.

The sending module is further configured to send a second charging resource creation request to a roaming charging system of a home network of the roaming user, where the second charging resource creation request is used to request to create a second charging resource for the data connection session.

The receiving module is further configured to receive a second charging resource creation response message returned by a charging management function of the home network, where the second charging resource creation response carries an identifier of the second charging resource.

The sending module is further configured to send a first charging request to the roaming charging system of the visited network, where the first charging request includes first charging information and the identifier of the first charging resource, and the first charging information is used to perform roaming charging for the data connection session.

The sending module is further configured to send a second charging request to the roaming charging system of the home network, where the second charging request includes second charging information and the identifier of the first charging resource, and the second charging information is used to perform online charging or converged charging for the data connection session.

Optionally, the first charging information includes third charging information and indication information corresponding to the third charging information, the third charging information is usage of a service data flow corresponding to the second charging information, and the service data flow corresponding to the second charging information is a service data flow with quota management or a service data flow without quota management.

Optionally, when the service data flow is a service data flow with quota management, the indication information indicates that the roaming charging system of the home network performs online charging on the usage that is of the service data flow and that is included in the third charging information; or
when the service data flow is a service data flow without quota management, the indication information indicates that the roaming charging system of the home network performs offline charging on the usage that is of the service data flow and that is included in the third charging information.

Optionally, the processing module is further configured to obtain a first roaming charging profile configured in the charging trigger device before the data connection session is created, where the first roaming charging profile in the charging trigger device is used for roaming charging for the data connection session. The first charging resource creation request carries the first roaming charging profile in the charging trigger device.

Optionally, the first charging resource creation response further carries a first roaming charging profile of the visited network, and the first roaming charging profile of the visited network includes a roaming charging configuration parameter immediately used for roaming charging for the data connection session, and/or one or more groups of roaming charging configuration parameters used for roaming charging for the data connection session after the data connection session is created and a corresponding effective condition is met.

Optionally, the second charging resource creation response further carries a first roaming charging profile of the home network, and the first roaming charging profile of the home network includes a roaming charging configuration parameter immediately used for roaming charging for the data connection session, and/or one or more groups of roaming charging configuration parameters used for roaming charging for the data connection session after the data connection session is created and a corresponding effective condition is met.

Optionally, the first charging information includes charging information corresponding to a quality of service flow QoS flow and/or charging information corresponding to a service. The second charging information includes online charging information of a service data flow on which online charging is performed in the data connection session, or includes converged charging information of a service data flow on which online charging is performed and a service data flow on which offline charging is performed in the data connection session.

Optionally, the receiving module is further configured to: after the data connection session is created, receive a first charging notification message sent by the roaming charging system of the visited network or a first charging response message corresponding to the first charging request, where the first charging response message or the first charging notification message includes a second roaming charging profile of the visited network, and the second roaming charging profile of the visited network includes a roaming charging configuration parameter immediately used for roaming charging for the data connection session, and/or one or more groups of roaming charging configuration parameters used for roaming charging for the data connection session after an included effective condition is met. The sending module is further configured to send the second charging request to the roaming charging system of the home network, and use the second charging resource creation request to carry the second roaming charging profile of the visited network.

Optionally, the receiving module is further configured to: after the data connection session is created, receive a second charging notification message sent by the roaming charging system of the home network or a second charging response message corresponding to the second charging request, where the second charging response message or the second charging notification message includes a second roaming charging profile of the home network, and the second roaming charging profile of the home network includes a roaming charging profile parameter immediately used for roaming charging for the data connection session of the user, and/or one or more groups of roaming charging configuration parameters used for roaming charging for the data connection session after an included effective condition is met.

Optionally, the sending module is further configured to: after the first roaming charging profile of the home network or the second roaming charging profile of the home network is received, send the first charging request to the roaming charging system of the visited network, where the first charging request further includes the roaming charging configuration parameter immediately used for roaming charging for the PDU session in the first roaming charging profile of the home network or the second roaming charging profile of the home network, or
the sending module is further configured to: after the effective condition included in the first roaming charging profile of the home network or the second roaming charging profile of the home network is met, send the first charging request to the roaming charging system of the visited network, where the first charging request further includes the roaming charging configuration parameter used for roaming charging for the data connection session after the effective condition is met in the first roaming charging profile of the home network or the second roaming charging profile of the home network.

In another optional manner, the module in the apparatus in FIG. 7 may be further configured to perform any step performed by the charging trigger device of the visited network in the method processes in FIG. 3 to FIG. 6.

FIG. 8 is a schematic diagram of a structure of an apparatus 800. The apparatus 800 may be the roaming charging system 102-1 or 102-2, or may be the roaming charging system of the visited network or the roaming charging system of the home network in the foregoing embodiment. Alternatively, the apparatus 800 may be the roaming charging system 102-1 or 102-2, or a chip in the roaming charging system of the visited network or the roaming charging system of the home network. This is not specifically limited in this embodiment of this application. As shown in FIG. 8, the apparatus includes a receiving module 801, a processing module 802, and a sending module 803.

The receiving module is configured to receive a charging resource creation request sent by a charging trigger device of a visited network, where the charging resource creation request is used to request to create a charging resource for a data connection session of a roaming user. The sending module is configured to return a charging resource creation response message to the charging trigger device of the visited network, where the charging resource creation response message carries an identifier of the created charging resource. The receiving module is further configured to: receive a first charging request sent by the charging trigger device of the visited network to the roaming charging system of the visited network, where the first charging request is used to perform roaming charging for the data connection session, or receive a second charging request sent by the charging trigger device of the visited network to the roaming charging system of the home network, where the second charging request is used to perform online charging or converged charging for the protocol data unit. The processing module is configured to charge the roaming user based on the first charging request or the second charging request.

Optionally, the charging resource creation request carries a roaming charging profile used for the data connection session.

Optionally, the processing module is further configured to generate an updated roaming charging profile used for the data connection session. The charging resource creation response further carries the updated roaming charging profile used for the data connection session, and the updated roaming charging profile used for the data connection session includes a roaming charging configuration parameter immediately used for roaming charging for the data connection session, and/or one or more groups of roaming charging configuration parameters used for roaming charging for the data connection session after the data connection session is created and a corresponding effective condition is met.

Optionally, the processing module is further configured to: after the data connection session is created, determine to update the roaming charging profile used for the data connection session, and generate the updated roaming charging profile used for the data connection session, where the updated roaming charging profile used for the data connection session includes a roaming charging configuration parameter immediately used for roaming charging for the data connection session, and/or one or more groups of roaming charging configuration parameters used for roaming charging for the data connection session after the data connection session is created and a corresponding effective condition is met and an effective condition of each group of roaming charging parameters.

Optionally, the apparatus is the roaming charging system of the visited network, the first charging request includes first charging information, and the first charging information includes charging information corresponding to a QoS flow and/or charging information corresponding to a service, and the charging the roaming user based on the first charging request includes: generating a roaming charging data record of the PDU session, where the roaming charging data record includes the first charging information.

Optionally, the first charging request further includes a roaming charging configuration parameter immediately used for roaming charging for the data connection session and a roaming charging profile change trigger in an updated roaming charging profile used for the PDU session and that is sent by the roaming charging system of the home network after the data connection session is created; and/or the first charging request further includes a roaming charging configuration parameter that is used for roaming charging for the data connection session after an effective condition is met and that is sent by the roaming charging system of the home network after the data connection session is created and a roaming charging information change trigger.

The roaming charging profile change trigger indicates that the first charging request is reported as triggered by a change of the roaming charging configuration parameter used for roaming charging for the data connection session.

Optionally, the apparatus is the roaming charging system of the home network, the second charging request includes second charging information, and the second charging information is used to apply for a quota for the data connection session and/or report usage.

The second charging information includes online charging information of a service data flow on which online charging is performed in the data connection session, and the charging the roaming user based on the second charging request includes: performing, by the roaming charging system of the home network, online charging on the second charging information, or the second charging information includes converged charging information of a service data flow on which online charging is performed and a service data flow on which offline charging is performed in the data connection session, and the charging the roaming user based on the second charging request includes: performing, by the roaming charging system of the home network, converged charging on the second charging information.

Optionally, the sending module is further configured to: after the data connection session is created, send a charging notification message or a charging response message corresponding to the charging request to the charging trigger device of the visited network, where the charging response message or the charging notification message includes the updated roaming charging profile used for the data connection session.

Optionally, the processing module is further configured to generate a DDR of the roaming user based on the roaming charging data record of the data connection session, where the DDR includes charging information of a quality of service flow in the data connection session and/or charging information of a service in the data connection session.

The DDR further includes a data record corresponding to the third charging information and an identifier that indicates the roaming charging system of the home network to perform charging processing on the third charging information.

In another optional manner, the module in the apparatus in FIG. 8 may be further configured to perform any step performed by the roaming charging system of the visited network or the roaming charging system of the home network in the method procedures in FIG. 3 to FIG. 6.

In this embodiment, the apparatus 800 and/or 700 are presented in a form of function modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions. In a simple embodiment, a person skilled in the art may figure out that the apparatus 800, 850 and/or 700 may use a form shown in FIG. 2.

For example, the processor 201 in FIG. 2 may invoke the computer executable instructions stored in the memory 203, so that the apparatus 800 performs the methods in the foregoing method embodiments.

Specifically, functions/implementation processes of the receiving module 801, the sending module 803, and the processing module 802 in FIG. 8, and the receiving module 701, the processing module 702, and the sending module 703 in FIG. 7 may be implemented by the processor 201 in FIG. 2 by invoking the computer executable instructions stored in the memory 203.

Optionally, when the apparatus 800 or 700 is a chip, functions/implementation processes of the modules may be implemented by using software, a circuit, or the like. Optionally, when the apparatus 800 and/or 700 are chips, the memory 203 may be a storage unit in the chip, for example, a register or a cache. Certainly, this is not specifically limited in embodiments of this application.

The apparatuses provided in embodiments of this application may be configured to perform the foregoing charging method. Therefore, for technical effects that can be obtained by the apparatuses, refer to the foregoing method embodiments. Details are not described herein again.

The roaming charging system of the visited network or the roaming charging system 800 of the home network, and/or the charging trigger device 700 of the visited network may be implemented on an integrated circuit, a radio frequency integrated circuit, a printed circuit board, or the like. In addition, the apparatus may be an independent device, or may be a part of a relatively large device. In this embodiment, the roaming charging system of the visited network or the roaming charging system 800 of the home network, and/or the charging trigger device 700 of the visited network are presented in a form of function modules obtained through division in an integrated manner. The module herein may be an ASIC, a circuit, a processor that executes one or more software or firmware programs, a memory, an integrated logic circuit, and/or another component capable of providing the foregoing functions.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprise" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the scope of this application. This application is intended to cover these modifications and variations of this application provided that they fall within the scope of protection defined by the following claims and their equivalent technologies.

## Claims

1. A roaming charging method in a local breakout roaming scenario, applied to a charging trigger device of a visited network, comprising:
receiving (302, 401) a creation request of a data connection session, and determining that a user of the data connection session is a roaming user based on user information carried in the creation request;
sending (304, 402) a first charging resource creation request to a roaming charging system of the visited network of the roaming user, wherein the first charging resource creation request is used to request to create a first charging resource for the data connection session;
receiving (306, 403) a first charging resource creation response message returned by the roaming charging system of the visited network, wherein the first charging resource creation response message carries an identifier of the first charging resource;
sending (308, 404) a second charging resource creation request to a roaming charging system of a home network of the roaming user, wherein the second charging resource creation request is used to request to create a second charging resource for the data connection session;
receiving (310, 405) a second charging resource creation response message returned by the roaming charging system of the home network, wherein the second charging resource creation response carries an identifier of the second charging resource;
sending (312, 408) a first charging request to the roaming charging system of the visited network, wherein the first charging request comprises first charging information and the identifier of the first charging resource, and the first charging information is used to perform roaming charging for the data connection session; and
sending (314, 408') a second charging request to the roaming charging system of the home network, wherein the second charging request comprises second charging information and the identifier of the second charging resource, and the second charging information is used to perform online charging or converged charging for the data connection session;
receiving (504, 604), after the data connection session is created and during the user uses a data service in the local breakout roaming scenario, a second roaming charging profile from the roaming charging system of the visited network or the roaming charging system of the home network;
updating (506, 606) an existing roaming charging profile in the charging trigger device of the visited network by using the second roaming charging profile.

2. The method according to claim 1, wherein the second roaming charging profile of the visited network comprises a group of roaming charging profile parameters that need to take effect immediately, or one or more groups of roaming charging profile parameters that take effect after an effective condition is met and the corresponding effective condition.

3. The method according to any one of claims 1 to 2, wherein the receiving the second roaming charging profile comprises:
receiving a response message of the second charging request from the roaming charging system of the home network, wherein the response message of the second charging request carries the generated second roaming charging profile; or
receiving a response message of the first charging request from the roaming charging system of the visited network, wherein the response message of the first charging request carries the generated second roaming charging profile.

4. The method according to claim 3, wherein the method further comprises:
receiving a notification message from the roaming charging system of the visited network, wherein the notification message is used to indicate the charging trigger device of the visited network to send the first charging request to the roaming charging system of the visited network; or
receiving a notification message from the roaming charging system of the home network, wherein the notification message is used to indicate the charging trigger device of the visited network to send the second charging request to the roaming charging system of the home network.

5. A roaming charging method in a local breakout roaming scenario, applied to a roaming charging system of a visited network or a roaming charging system of a home network, comprising:
receiving (304, 308, 402, 404) a charging resource creation request sent by a charging trigger device of the visited network, wherein the charging resource creation request is used to request to create a charging resource for a data connection session of a roaming user;
returning (306, 310, 403, 405) a charging resource creation response message to the charging trigger device of the visited network, wherein the charging resource creation response message carries an identifier of the created charging resource;
receiving (312, 408) a first charging request sent by the charging trigger device of the visited network to the roaming charging system of the visited network, wherein the first charging request is used to perform roaming charging for the data connection session, or receiving (314, 408') a second charging request sent by the charging trigger device of the visited network to the roaming charging system of the home network, wherein the second charging request is used to perform online charging or converged charging for the data connection session; and
charging the roaming user based on the first charging request or the second charging request,
determining (502, 602) to send a second roaming charging profile to the charging trigger device of the visited network after the data connection session is created and during the user uses a data service in the local breakout roaming scenario;
generating (502, 602) the second roaming charging profile of the visited network;
sending (504, 604) the second charging profile to the charging trigger device of the visited network, wherein the second roaming charging profile is used to update a roaming charging profile in the charging trigger device of the visited network.

6. The method according to claim 5, wherein the charging resource creation request carries a roaming charging profile used for the data connection session.

7. The method according to any one of claims 5 to 6, wherein the method is applied to the roaming charging system of the visited network, the first charging request comprises first charging information, and the first charging information comprises charging information corresponding to a quality of service flow or charging information corresponding to a service; and
the charging the roaming user based on the first charging request comprises: generating a roaming charging data record of the data connection session, wherein the roaming charging data record comprises the first charging information.

8. The method according to any one of claims 5 to 7, wherein the method is applied to the roaming charging system of the home network, the second charging request comprises second charging information, and the second charging information is used to apply for a quota for the data connection session or report usage; and
the second charging information comprises online charging information of a service data flow on which online charging is performed in the data connection session, and the charging the roaming user based on the second charging request comprises: performing, by the roaming charging system of the home network, online charging on the second charging information; or
the second charging information comprises converged charging information of a service data flow on which online charging is performed and a service data flow on which offline charging is performed in the data connection session, and the charging the roaming user based on the second charging request comprises: performing, by the roaming charging system of the home network, converged charging on the second charging information.

9. The method according to any one of claims 5 to 8, wherein the second roaming charging profile of the visited network comprises a group of roaming charging profile parameters that need to take effect immediately, or one or more groups of roaming charging profile parameters that take effect after an effective condition is met and the corresponding effective condition.

10. The method according to any one of claims 5 to 9, wherein, when the method applied to the roaming charging system of the visited network, the method further comprises:
determining, based on one or more of a change of a slice and switching of a roaming policy at a specific time, to update the roaming charging profile in the charging trigger device of the visited network.

11. The method according to any one of claims 5 to 9, wherein, when the method applied to the roaming charging system of the home network, the method further comprises:
determining to update the roaming charging profile in the charging trigger device of the visited network based on a change of user subscription information, a change of a slice, a change of a user account, or switching of a roaming policy at a specific time point.

12. The method according to any one of claims 5 to 11, wherein the sending the second roaming charging profile to the charging trigger device of the visited network comprises:
sending a response message of the first charging request to the charging trigger device of the visited network if the first charging request of the protocol data connection is processed by the roaming charging system of the visited network and if the method is applied to the roaming charging system of the visited network, wherein the response message of a first charging request carries the generated second roaming charging profile; or
sending a response message of a second charging request to the charging trigger device of the visited network if the first charging request of the protocol data connection is processed by the roaming charging system of the home network and if the method is applied to the roaming charging system of the home network, wherein the response message of the second charging request carries the generated second roaming charging profile.

13. The method according to claim 12, further comprising
sending a notification message to the charging trigger device of the visited network to indicate the charging trigger device of the visited network to send the first charging request to use the response message of the first charging request to carry the generated second roaming charging profile; or
sending a notification message to the charging trigger device of the visited network to indicate the charging trigger device of the visited network to send second charging request to use the response message of the second charging request to carry the generated second roaming charging profile.

14. An apparatus, comprising a communication interface, a memory, and one or more processors, wherein one or more programs are stored in the memory, and when the one or more processors execute the one or more programs, the apparatus is enabled to implement the method according to any one of claims 1 to 4, or the apparatus is enabled to implement the method according to any one of claims 5 to 13.

15. A computer storage medium, comprising computer instructions, wherein when the computer instructions are run on an apparatus, the apparatus is enabled to perform the method according to any one of claims 1 to 4, or the apparatus is enabled to implement the method according to any one of claims 5 to 13.

16. A computer program product, wherein when the computer program product runs on a computer, the computer is enabled to perform the method according to any one of claims 1 to 4, or to perform the method according to any one of claims 5-13.

## Patentansprüche

1. Roaming-Abrechnungsverfahren in einem lokalen Breakout-Roaming-Szenario, das auf eine Abrechnungsauslösevorrichtung eines besuchten Netzes angewendet wird, umfassend:
Empfangen (302, 401) einer Herstellungsanforderung einer Datenverbindungssitzung und, basierend auf den Benutzerinformationen, die in der Herstellungsanforderung enthalten sind, Bestimmen, dass ein Benutzer der Datenverbindungssitzung ein Roaming-Benutzer ist;
Senden (304, 402) einer ersten Abrechnungsressourcenherstellungsanforderung an ein Roaming-Abrechnungssystem des besuchten Netzes des Roaming-Benutzers, wobei die erste Abrechnungsressourcenherstellungsanforderung dazu verwendet wird, ein Herstellen einer ersten Abrechnungsressource für die Datenverbindungssitzung anzufordern;
Empfangen (306, 403) einer ersten Abrechnungsressourcenherstellungsantwortnachricht, die von dem Roaming-Abrechnungssystem des besuchten Netzes zurückgegeben wird, wobei die erste Abrechnungsressourcenherstellungsantwortnachricht eine Kennung der ersten Abrechnungsressource enthält;
Senden (308, 404) einer zweiten Abrechnungsressourcenherstellungsanforderung an ein Roaming-Abrechnungssystem eines Heimnetzes des Roaming-Benutzers, wobei die zweite Abrechnungsressourcenherstellungsanforderung dazu verwendet wird, ein Herstellen einer zweiten Abrechnungsressource für die Datenverbindungssitzung anzufordern;
Empfangen (310, 405) einer zweiten Abrechnungsressourcenherstellungsantwortnachricht, die von dem Roaming-Abrechnungssystem des Heimnetzes zurückgegeben wird, wobei die zweite Abrechnungsressourcenherstellungsantwort eine Kennung der zweiten Abrechnungsressource enthält;
Senden (312, 408) einer ersten Abrechnungsanforderung an das Roaming-Abrechnungssystem des besuchten Netzes, wobei die erste Abrechnungsanforderung erste Abrechnungsinformationen und die Kennung der ersten Abrechnungsressource umfasst und die ersten Abrechnungsinformationen dazu verwendet werden, eine Roaming-Abrechnung für die Datenverbindungssitzung durchzuführen; und
Senden (314, 408') einer zweiten Abrechnungsanforderung an das Roaming-Abrechnungssystem des Heimnetzes, wobei die zweite Abrechnungsanforderung zweite Abrechnungsinformationen und die Kennung der zweiten Abrechnungsressource umfasst und die zweiten Abrechnungsinformationen dazu verwendet werden, eine Online-Abrechnung oder eine konvergente Abrechnung für die Datenverbindungssitzung durchzuführen;
Empfangen (504, 604), nachdem die Datenverbindungssitzung hergestellt wurde und während der Benutzer einen Datendienst in dem lokalen Breakout-Roaming-Szenario verwendet, eines zweiten Roaming-Abrechnungsprofils von dem Roaming-Abrechnungssystem des besuchten Netzes oder von dem Roaming-Abrechnungssystem des Heimnetzes;
Aktualisieren (506, 606) eines bestehenden Roaming-Abrechnungsprofils in der Abrechnungsauslösevorrichtung des besuchten Netzes unter Verwendung des zweiten Roaming-Abrechnungsprofils.

2. Verfahren nach Anspruch 1, wobei das zweite Roaming-Abrechnungsprofil des besuchten Netzes eine Gruppe von Roaming-Abrechnungsprofilparametern, die sofort wirksam werden müssen, oder eine oder mehrere Gruppen von Roaming-Abrechnungsprofilparametern, die wirksam werden, nachdem eine Wirksamkeitsbedingung erfüllt ist, und die entsprechende Wirksamkeitsbedingung umfasst.

3. Verfahren nach einem der Ansprüche 1 bis 2, wobei das Empfangen des zweiten Roaming-Abrechnungsprofils Folgendes umfasst:
Empfangen einer Antwortnachricht der zweiten Abrechnungsanforderung von dem Roaming-Abrechnungssystem des Heimnetzes, wobei die Antwortnachricht der zweiten Abrechnungsanforderung das erzeugte zweite Roaming-Abrechnungsprofil enthält; oder
Empfangen einer Antwortnachricht der ersten Abrechnungsanforderung von dem Roaming-Abrechnungssystem des besuchten Netzes, wobei die Antwortnachricht der ersten Abrechnungsanforderung das erzeugte zweite Roaming-Abrechnungsprofil enthält.

4. Verfahren nach Anspruch 3, wobei das Verfahren ferner Folgendes umfasst:
Empfangen einer Benachrichtigungsnachricht von dem Roaming-Abrechnungssystem des besuchten Netzes, wobei die Benachrichtigungsnachricht dazu verwendet wird, die Abrechnungsauslösevorrichtung des besuchten Netzes anzuweisen, die erste Abrechnungsanforderung an das Roaming-Abrechnungssystem des besuchten Netzes zu senden; oder
Empfangen einer Benachrichtigungsnachricht von dem Roaming-Abrechnungssystem des Heimnetzes, wobei die Benachrichtigungsnachricht dazu verwendet wird, die Abrechnungsauslösevorrichtung des besuchten Netzes anzuweisen, die zweite Abrechnungsanforderung an das Roaming-Abrechnungssystem des Heimnetzes zu senden.

5. Roaming-Abrechnungsverfahren in einem lokalen Breakout-Roaming-Szenario, das auf ein Roaming-Abrechnungssystem eines besuchten Netzes oder ein Roaming-Abrechnungssystem eines Heimnetzes angewendet wird, umfassend:
Empfangen (304, 308,402, 404) einer Abrechnungsressourcenherstellungsanforderung, die durch eine Abrechnungsauslösevorrichtung des besuchten Netzes gesendet wird, wobei die Abrechnungsressourcenherstellungsanforderung dazu verwendet wird, ein Herstellen einer Abrechnungsressource für eine Datenverbindungssitzung eines Roaming-Benutzers anzufordern;
Zurückgeben (306, 310, 403, 405) einer Abrechnungsressourcenherstellungsantwortnachricht an die Abrechnungsauslösevorrichtung des besuchten Netzes, wobei die Abrechnungsressourcenherstellungsantwortnachricht eine Kennung der hergestellten Abrechnungsressource enthält;
Empfangen (312, 408) einer ersten Abrechnungsanforderung, die durch die Abrechnungsauslösevorrichtung des besuchten Netzes an das Roaming-Abrechnungssystem des besuchten Netzes gesendet wird, wobei die erste Abrechnungsanforderung dazu verwendet wird, eine Roaming-Abrechnung für die Datenverbindungssitzung durchzuführen, oder Empfangen (314, 408') einer zweiten Abrechnungsanforderung, die durch die Abrechnungsauslösevorrichtung des besuchten Netzes an das Roaming-Abrechnungssystem des Heimnetzes gesendet wird, wobei die zweite Abrechnungsanforderung dazu verwendet wird, eine Online-Abrechnung oder eine konvergente Abrechnung für die Datenverbindungssitzung durchzuführen; und
Abrechnen des Roaming-Benutzers basierend auf der ersten oder der zweiten Abrechnungsanforderung,
Bestimmen (502, 602), ein zweites Roaming-Abrechnungsprofil an die Abrechnungsauslösevorrichtung des besuchten Netzes zu senden, nachdem die Datenverbindungssitzung hergestellt wurde und während der Benutzer einen Datendienst in dem lokalen Breakout-Roaming-Szenario verwendet;
Erzeugen (502, 602) des zweiten Roaming-Abrechnungsprofils des besuchten Netzes;
Senden (504, 604) des zweiten Abrechnungsprofils an die Abrechnungsauslösevorrichtung des besuchten Netzes, wobei das zweite Roaming-Abrechnungsprofil dazu verwendet wird, ein Roaming-Abrechnungsprofil in der Abrechnungsauslösevorrichtung des besuchten Netzes zu aktualisieren.

6. Verfahren nach Anspruch 5, wobei die Abrechnungsressourcenherstellungsanforderung ein Roaming-Abrechnungsprofil enthält, das für die Datenverbindungssitzung verwendet wird.

7. Verfahren nach einem der Ansprüche 5 bis 6, wobei das Verfahren auf das Roaming-Abrechnungssystem des besuchten Netzes angewendet wird, die erste Abrechnungsanforderung erste Abrechnungsinformationen umfasst und die ersten Abrechnungsinformationen Abrechnungsinformationen, die einer Dienstgütestrom entsprechen, oder Abrechnungsinformationen, die einem Dienst entsprechen, umfassen; und
das Abrechnen des Roaming-Benutzers basierend auf der ersten Abrechnungsanforderung Folgendes umfasst: Erzeugen einer Roaming-Abrechnungsdatenaufzeichung der Datenverbindungssitzung, wobei die Roaming-Abrechnungsdatenaufzeichung die ersten Abrechnungsinformationen umfasst.

8. Verfahren nach einem der Ansprüche 5 bis 7, wobei das Verfahren auf das Roaming-Abrechnungssystem des Heimnetzes angewendet wird, die zweite Abrechnungsanforderung zweite Abrechnungsinformationen umfasst und die zweiten Abrechnungsinformationen dazu verwendet werden, ein Kontingent für die Datenverbindungssitzung zu beantragen oder eine Verwendung zu melden; und
die zweiten Abrechnungsinformation Online-Abrechnungsinformationen eines Dienstdatenstroms umfassen, an denen in der Datenverbindungssitzung eine Online-Abrechnung durchgeführt wird, und das Abrechnen des Roaming-Benutzers basierend auf der zweiten Abrechnungsanforderung Folgendes umfasst: Durchführen, durch das Roaming-Abrechnungssystem des Heimnetzes, der Online-Abrechnung an den zweiten Abrechnungsinformationen; oder
die zweiten Abrechnungsinformation konvergierte Abrechnungsinformationen eines Dienstdatenstroms, an denen eine Online-Abrechnung durchgeführt wird, und eines Dienstdatenstroms, an denen eine Offline-Abrechnung in der Datenverbindungssitzung durchgeführt wird, umfassen und das Abrechnen des Roaming-Benutzers basierend auf der zweiten Abrechnungsanforderung Folgendes umfasst: Durchführen, durch das Roaming-Abrechnungssystem des Heimnetzes, der konvergenten Abrechnung an den zweiten Abrechnungsinformationen.

9. Verfahren nach einem der Ansprüche 5 bis 8, wobei das zweite Roaming-Abrechnungsprofil des besuchten Netzes eine Gruppe von Roaming-Abrechnungsprofilparametern, die sofort wirksam werden müssen, oder eine oder mehrere Gruppen von Roaming-Abrechnungsprofilparametern, die wirksam werden, nachdem eine Wirksamkeitsbedingung erfüllt ist, und die entsprechende Wirksamkeitsbedingung umfasst.

10. Verfahren nach einem der Ansprüche 5 bis 9, wobei das Verfahren, wenn das Verfahren auf das Roaming-Abrechnungssystem des besuchten Netzes angewendet wird, ferner Folgendes umfasst:
Bestimmen, basierend auf einem oder mehreren einer Änderung einer Netzpartition und eines Wechselns einer Roaming-Richtlinie zu einem bestimmten Zeitpunkt, das Roaming-Abrechnungsprofil in der Abrechnungsauslösevorrichtung des besuchten Netzes zu aktualisieren.

11. Verfahren nach einem der Ansprüche 5 bis 9, wobei das Verfahren, wenn das Verfahren auf das Roaming-Abrechnungssystem des Heimnetzes angewendet wird, ferner Folgendes umfasst:
Bestimmen, das Roaming-Abrechnungsprofil in der Abrechnungsauslösevorrichtung des besuchten Netzes basierend auf einer Änderung von Benutzerabonnementinformationen, einer Änderung einer Netzwerkpartition, einer Änderung eines Benutzerkontos oder eines Wechselns der Roaming-Richtlinie zu einem bestimmten Zeitpunkt zu aktualisieren.

12. Verfahren nach einem der Ansprüche 5 bis 11, wobei das Senden des zweiten Roaming-Abrechnungsprofils an die Abrechnungsauslösevorrichtung des besuchten Netzes Folgendes umfasst:
Senden einer Antwortnachricht der ersten Abrechnungsanforderung an die Abrechnungsauslösevorrichtung des besuchten Netzes, wenn die erste Abrechnungsanforderung der Protokolldatenverbindung durch das Roaming-Abrechnungssystem des besuchten Netzes verarbeitet wird und wenn das Verfahren auf das Roaming-Abrechnungssystem des besuchten Netzes angewendet wird, wobei die Antwortnachricht einer ersten Abrechnungsanforderung das erzeugte zweite Roaming-Abrechnungsprofil enthält; oder
Senden einer Antwortnachricht der zweiten Abrechnungsanforderung an die Abrechnungsauslösevorrichtung des besuchten Netzes, wenn die erste Abrechnungsanforderung der Protokolldatenverbindung durch das Roaming-Abrechnungssystem des Heimnetzes verarbeitet wird und wenn das Verfahren auf das Roaming-Abrechnungssystem des Heimnetzes angewendet wird, wobei die Antwortnachricht der zweiten Abrechnungsanforderung das erzeugte zweite Roaming-Abrechnungsprofil enthält.

13. Verfahren nach Anspruch 12, ferner umfassend
Senden einer Benachrichtigungsnachricht an die Abrechungsauslösevorrichtung des besuchten Netzes, um die Abrechnungsauslösevorrichtung des besuchten Netzes anzuweisen, die erste Abrechnungsanforderung zu senden, um die Antwortnachricht der ersten Abrechnungsanforderung dazu zu verwenden, das erzeugte zweite Roaming-Abrechnungsprofil zu enthalten; oder
Senden einer Benachrichtigungsnachricht an die Abrechnungsauslösevorrichtung des besuchten Netzes, um die Abrechnungsauslösevorrichtung des besuchten Netzes anzuweisen, eine zweite Abrechnungsanforderung zu senden, um die Antwortnachricht der zweiten Abrechnungsanforderung dazu zu verwenden, das erzeugte zweite Roaming-Abrechnungsprofil zu enthalten.

14. Einrichtung, umfassend eine Kommunikationsschnittstelle, einen Speicher und einen oder mehrere Prozessoren, wobei ein oder mehrere Programme in dem Speicher gespeichert sind und, wenn der eine oder die mehreren Prozessoren das eine oder die mehreren Programme ausführen, die Einrichtung in die Lage versetzt wird, das Verfahren nach einem der Ansprüche 1 bis 4 zu implementieren, oder die Einrichtung in die Lage versetzt wird, das Verfahren nach einem der Ansprüche 5 bis 13 zu implementieren.

15. Computerspeichermedium, umfassend Computeranweisungen, wobei, wenn die Computeranweisungen auf einer Einrichtung laufen, die Einrichtung in die Lage versetzt wird, das Verfahren nach einem der Ansprüche 1 bis 4 zu implementieren, oder die Einrichtung in die Lage versetzt wird, das Verfahren nach einem der Ansprüche 5 bis 13 zu implementieren.

16. Computerprogrammprodukt, wobei, wenn das Computerprogrammprodukt auf einem Computer läuft, der Computer in die Lage versetzt wird, das Verfahren nach einem der Ansprüche 1 bis 4 durchzuführen oder das Verfahren nach einem der Ansprüche 5-13 durchzuführen.

## Revendications

1. Procédé de taxation en itinérance dans un scénario en itinérance locale, appliquée à un dispositif de déclenchement de taxation d'un réseau visité, comprenant :
la réception (302, 401) d'une demande de création d'une session de connexion de données, et la détermination qu'un utilisateur de la session de connexion de données est un utilisateur en itinérance sur la base d'informations utilisateur contenues dans la demande de création ;
l'envoi (304, 402) d'une première demande de création de ressource de taxation à un système de taxation en itinérance du réseau visité de l'utilisateur en itinérance, dans lequel la première demande de création de ressource de taxation est utilisée pour demander la création d'une première ressource de taxation pour la session de connexion de données ;
la réception (306, 403) d'un premier message de réponse de création de ressource de taxation renvoyé par le système de taxation en itinérance du réseau visité, dans lequel le premier message de réponse de création de ressource de taxation contient un identifiant de la première ressource de taxation ;
l'envoi (308, 404) d'une seconde demande de création de ressource de taxation à un système de taxation en itinérance du réseau domestique de l'utilisateur en itinérance, dans lequel la seconde demande de création de ressource de taxation est utilisée pour demander la création d'une seconde ressource de taxation pour la session de connexion de données ;
la réception (310, 405) d'un second message de réponse de création de ressource de taxation renvoyé par le système de taxation en itinérance du réseau domestique, dans lequel la seconde réponse de création de ressource de taxation contient un identifiant de la seconde ressource de taxation ;
l'envoi (312, 408) d'une première demande de taxation au système de taxation en itinérance du réseau visité, dans lequel la première demande de taxation comprend les premières informations de taxation et l'identifiant de la première ressource de taxation, et les premières informations de taxation sont utilisées pour réaliser la taxation en itinérance de la session de connexion de données ; et
l'envoi (314, 408') d'une seconde demande de taxation au système de taxation en itinérance du réseau domestique, dans lequel la seconde demande de taxation comprend des secondes informations de taxation et l'identifiant de la seconde ressource de taxation, et les secondes informations de taxation sont utilisées pour réaliser une taxation en ligne ou une taxation convergente pour la session de connexion de données ;
la réception (504, 604), après que la session de connexion de données est créée et pendant que l'utilisateur utilise un service de données dans le scénario en itinérance locale, d'un second profil de taxation en itinérance provenant du système de taxation en itinérance du réseau visité ou du système de taxation en itinérance du réseau domestique ;
la mise à jour (506, 606) d'un profil de taxation en itinérance existant dans le dispositif de déclenchement de taxation du réseau visité à l'aide du second profil de taxation en itinérance.

2. Procédé selon la revendication 1, dans lequel le second profil de taxation en itinérance du réseau visité comprend un groupe de paramètres de profil de taxation en itinérance qui doivent prendre effet immédiatement, ou un ou plusieurs groupes de paramètres de profil de taxation en itinérance qui prennent effet après qu'une condition d'effet est remplie et la condition d'effet correspondante.

3. Procédé selon l'une quelconque des revendications 1 et 2, dans lequel la réception du second profil de taxation en itinérance comprend :
la réception d'un message de réponse à la seconde demande de taxation provenant du système de taxation en itinérance du réseau domestique, dans lequel le message de réponse à la seconde demande de taxation contient le second profil de taxation en itinérance généré ; ou
la réception d'un message de réponse à la première demande de taxation provenant du système de taxation en itinérance du réseau visité, dans lequel le message de réponse à la première demande de taxation contient le second profil de taxation en itinérance généré.

4. Procédé selon la revendication 3, dans lequel le procédé comprend également :
la réception d'un message de notification provenant du système de taxation en itinérance du réseau visité, dans lequel le message de notification est utilisé pour indiquer au dispositif de déclenchement de taxation du réseau visité d'envoyer la première demande de taxation au système de taxation en itinérance du réseau visité ; ou
la réception d'un message de notification provenant du système de taxation en itinérance du réseau domestique, dans lequel le message de notification est utilisé pour à indiquer au dispositif de déclenchement de taxation du réseau visité d'envoyer la seconde demande de taxation au système de taxation en itinérance du réseau visité.

5. Procédé de taxation en itinérance dans un scénario en itinérance locale, appliquée à un système de taxation en itinérance d'un réseau visité ou à un système de taxation en itinérance d'un réseau domestique, comprenant :
la réception (304, 308, 402, 404) d'une demande de création de ressource de taxation envoyée par un dispositif de déclenchement de taxation du réseau visité, dans lequel la demande de création de ressource de taxation est utilisée pour demander la création d'une ressource de taxation pour une session de connexion de données d'un utilisateur en itinérance ;
le renvoi (306, 310, 403, 405) d'un message de réponse de création de ressource de taxation au dispositif de déclenchement de taxation du réseau visité, dans lequel le message de réponse de création de ressource de taxation contient un identifiant de la ressource de taxation créée ;
la réception (312, 408) d'une première demande de taxation envoyée par le dispositif de déclenchement de taxation du réseau visité au système de taxation en itinérance du réseau visité, dans lequel la première demande de taxation est utilisée pour réaliser la taxation en itinérance pour la session de connexion de données, ou la réception (314, 408') d'une seconde demande de taxation envoyée par le dispositif de déclenchement de taxation du réseau visité au système de taxation en itinérance du réseau domestique, dans lequel la seconde demande de taxation est utilisée pour réaliser la taxation en ligne ou la taxation convergente pour la session de connexion de données ; et
la taxation de l'utilisateur en itinérance sur la base de la première demande de taxation ou de la seconde demande de taxation,
la détermination (502, 602) de l'envoi d'un second profil de taxation en itinérance au dispositif de déclenchement de taxation du réseau visité après que la session de connexion de données est créée et pendant que l'utilisateur utilise un service de données dans le scénario en itinérance locale ;
la génération (502, 602) du second profil de taxation en itinérance du réseau visité ;
l'envoi (504, 604) du second profil de taxation au dispositif de déclenchement de taxation du réseau visité, dans lequel le second profil de taxation en itinérance est utilisé pour mettre à jour un profil de taxation en itinérance dans le dispositif de déclenchement de taxation du réseau visité.

6. Procédé selon la revendication 5, dans lequel la demande de création de ressource de taxation contient un profil de taxation en itinérance utilisé pour la session de connexion de données.

7. Procédé selon l'une quelconque des revendications 5 à 6, dans lequel le procédé est appliqué au système de taxation en itinérance du réseau visité, la première demande de taxation comprend des premières informations de taxation, et les premières informations de taxation comprennent des informations de taxation correspondant à un flux de qualité de service ou des informations de taxation correspondant à un service ; et
la taxation de l'utilisateur en itinérance sur la base de la première demande de taxation comprend : la génération d'un enregistrement de données de taxation en itinérance de la session de connexion de données, dans lequel l'enregistrement de données de taxation en itinérance comprend les premières informations de taxation.

8. Procédé selon l'une quelconque des revendications 5 à 7, dans lequel le procédé est appliqué au système de taxation en itinérance du réseau domestique, la seconde demande de taxation comprend des secondes informations de taxation, et les secondes informations de taxation sont utilisées pour demander un quota pour la session de connexion de données ou pour déclarer l'utilisation ; et
les secondes informations de taxation comprennent des informations de taxation en ligne d'un flux de données de service sur lequel la taxation en ligne est réalisée dans la session de connexion de données, et la taxation de l'utilisateur en itinérance sur la base de la seconde demande de taxation comprend : le réalisation, par le système de taxation en itinérance du réseau domestique, d'une taxation en ligne sur les secondes informations de taxation ; ou
les secondes informations de taxation comprennent des informations de taxation convergente d'un flux de données de service sur lequel la taxation en ligne est réalisée et un flux de données de service sur lequel la taxation hors ligne est réalisée dans la session de connexion de données, et la taxation de l'utilisateur en itinérance sur la base de la seconde demande de taxation comprend : la réalisation, par le système de taxation en itinérance du réseau domestique, d'une taxation convergente sur les secondes informations de taxation.

9. Procédé selon l'une quelconque des revendications 5 à 8, dans lequel le second profil de taxation en itinérance du réseau visité comprend un groupe de paramètres de profil de taxation en itinérance qui doivent prendre effet immédiatement, ou un ou plusieurs groupes de paramètres de profil de taxation en itinérance qui prennent effet après qu'une condition d'effet soit remplie et la condition d'effet correspondante.

10. Procédé selon l'une quelconque des revendications 5 à 9, dans lequel, lorsque le procédé est appliqué au système de taxation en itinérance du réseau visité, le procédé comprend également :
la détermination, sur la base de l'un ou plusieurs d'un changement de tranche et d'une commutation d'une politique en itinérance à un moment précis, de la mise à jour du profil de taxation en itinérance dans le dispositif de déclenchement de taxation du réseau visité.

11. Procédé selon l'une quelconque des revendications 5 à 9, dans lequel, lorsque le procédé est appliqué au système de taxation en itinérance du réseau domestique, le procédé comprend également :
la détermination de la mise à jour du profil de taxation en itinérance dans le dispositif de déclenchement de taxation du réseau visité sur la base d'un changement des informations d'abonnement de l'utilisateur, d'un changement d'une tranche, d'un changement d'un compte utilisateur, ou d'une commutation d'une politique en itinérance à un moment précis.

12. Procédé selon l'une quelconque des revendications 5 à 11, dans lequel l'envoi du second profil de taxation en itinérance au dispositif de déclenchement de taxation du réseau visité comprend :
l'envoi d'un message de réponse à la première demande de taxation au dispositif de déclenchement de taxation du réseau visité si la première demande de taxation de la connexion de données de protocole est traitée par le système de taxation en itinérance du réseau visité et si le procédé est appliqué au système de taxation en itinérance du réseau visité, dans lequel le message de réponse à une première demande de taxation contient le second profil de taxation en itinérance généré ; ou
l'envoi d'un message de réponse à la seconde demande de taxation au dispositif de déclenchement de taxation du réseau visité si la première demande de taxation de la connexion de données de protocole est traitée par le système de taxation en itinérance du réseau domestique et si le procédé est appliqué au système de taxation en itinérance du réseau domestique, dans lequel le message de réponse à une seconde demande de taxation contient le second profil de taxation en itinérance généré.

13. Procédé selon la revendication 12, comprenant également l'envoi d'un message de notification au dispositif de déclenchement de taxation du réseau visité pour indiquer au dispositif de déclenchement de taxation d'envoyer la première demande de taxation pour utiliser le message de réponse à la première demande pour contenir le second profil de taxation en itinérance généré ; ou
l'envoi d'un message de notification au dispositif de déclenchement de taxation du réseau visité pour indiquer au dispositif de déclenchement de taxation d'envoyer la seconde demande de taxation pour utiliser le message de réponse de la seconde demande de taxation pour contenir le second profil de taxation en itinérance généré.

14. Appareil, comprenant une interface de communication, une mémoire, et un ou plusieurs processeurs, dans lequel un ou plusieurs programmes sont stockés dans la mémoire, et lorsque les un ou plusieurs processeurs exécutent les un ou plusieurs programmes, l'appareil est activé pour mettre en œuvre le procédé selon l'une quelconque des revendications 1 à 4, ou l'appareil est activé pour mettre en œuvre le procédé selon l'une quelconque des revendications 5 à 13.

15. Support de stockage informatique, comprenant des instructions informatiques, dans lequel lorsque les instructions fonctionnent sur un appareil, l'appareil est activé pour réaliser le procédé selon l'une quelconque des revendications 1 à 4, ou l'appareil est activé pour mettre en œuvre le procédé selon l'une quelconque des revendications 5 à 13.

16. Produit de programme informatique, dans lequel lorsque le produit de programme informatique fonctionne sur un ordinateur, l'ordinateur est activé pour réaliser le procédé selon l'une quelconque des revendications 1 à 4 ou réaliser le procédé selon l'une quelconque des revendications 5 à 13.
